# EUROPÄISCHE PATENTSCHRIFT

(11) **EP 4 327 419 B1**
(45) Veröffentlichungstag und Bekanntmachung des Hinweises auf die Patenterteilung: **01.10.2025**
(21) Anmeldenummer: 22725181.6
(22) Anmeldetag: 22.04.2022
(51) Int. Cl.: H01S 3/10, G02B 27/14, G02B 27/28

(54) **ÜBERLAGERUNGSEINRICHTUNG UND OPTISCHES SYSTEM**
SUPERPOSITION DEVICE AND OPTICAL SYSTEM
DISPOSITIF DE SUPERPOSITION ET SYSTÈME OPTIQUE

(30) Priorität: 23.04.2021 DE 102021204057
(43) Veröffentlichungstag der Anmeldung: 28.02.2024
(73) Patentinhaber: TRUMPF Laser- und Systemtechnik SE, 71254 Ditzingen (DE)
(72) Erfinder: KUMKAR, Malte, 99425 Weimar (DE)
(74) Vertreter: Trumpf Patentabteilung
(86) Internationale Anmeldenummer: PCT/EP2022/060657
(87) Internationale Veröffentlichungsnummer: WO 2022/223761

(56) Entgegenhaltungen:
- WO-A1-2006/104704
- WO-A1-2016/133707
- WO-A2-2019/220430
- DE-A1- 102017 104 392
- US-A1- 2021 119 707

## Beschreibung

Die vorliegende Erfindung betrifft ein optisches System mit einer Überlagerungseinrichtung zur kohärenten Überlagerung von vier zueinander kohärenten Eingangsstrahlen zu einem Ausgangsstrahl. Bei den vier zueinander kohärenten Eingangsstrahlen und bei dem bei der Überlagerung gebildeten Ausgangsstrahl handelt es sich typischerweise um Laserstrahlen.

Die weiter oben beschriebene Überlagerungseinrichtung ist bevorzugt ausgebildet, die vier Eingangsstrahlen kollinear zu überlagern, wobei insbesondere eine deckungsgleiche Überlagerung zu dem Ausgangsstrahl erfolgen kann. Die kohärente Überlagerung der vier Eingangsstrahlen ermöglicht es, die Eigenschaften des Ausgangsstrahls, beispielsweise die Leistung des Ausgangsstrahls und/oder den Polarisationszustand des Ausgangsstrahls, zu modulieren bzw. zu manipulieren.

Eine schnelle Polarisationsmodulation kann generell durch interferometrische Systeme realisiert werden, in die ein einzelner Eingangsstrahl eingekoppelt wird und bei denen die Manipulation der Phase durch in das Interferometer integrierte Phasenschieber erfolgt, vgl. beispielsweise den Artikel "The rotating linerarly polarized light from a polarizing Mach-Zehnder interferometer: Production and applications", C. Pawong et al., Opt. Lasers Tec. 43, 461-468 (2011), oder den Artikel "Investigation of the use of rotating linearly polarized light for characterizing SiO2 thin-film on Si substrate", C. Pawong et al., in: Optoelectronic Materials and Devices, G. Duan, ed., Vol. 8308 of Proceedings of SPIE (2011), paper 830811.

Die schnelle Polarisationsmodulation kann beispielsweise zum Einschreiben polarisationsbeeinflussender Nanostrukturen in transparente Materialien zur Datenspeicherung mit einer hohen Speicherdichte sowie einer äußerst langen Lebensdauer eingesetzt werden, siehe beispielsweise den Artikel "Eternal 5D data storage by ultrafast laser writing in glass" von J. Zhang et al., Proc. of SPIE Vol. 9736, 97360U (2016). Ein entsprechendes optisches Datenspeichersystem auf der Basis von in ein Glasmaterial eingeschriebenen Nanogittern, die bei der Einstrahlung von Licht mit einer räumlich modulierten Phase und Polarisation gebildet werden, ist in der US 10,236,027 B1 beschrieben. Für die Modulation der Phase und der Polarisation wird dort ein Flüssigkristall-Spatial-Light-Modulator (SLM) eingesetzt.

In der US 10,181,336 B1 ist ein optisches Datenspeichersystem beschrieben, das für die Datenspeicherung ein dynamisches digitales Hologramm mit unabhängig programmierbaren holographischen Zonen aufweist. Das dynamische digitale Hologramm kann als optisch ansteuerbarer SLM ausgebildet sein.

Bei den oben beschriebenen Verfahren und Vorrichtungen zum Einschreiben von Nanostrukturen bzw. Voxeln in ein transparentes Material ist die Dynamik aufgrund von Multiplexing und/oder der Segmentierung von Multispot-Feldern hinsichtlich ihres Polarisationszustands eingeschränkt.

In US9792945B1 wird ein 3D optischer Datenspeicher beschrieben. Mithilfe von Lichtenergie wird die elektrische Eigenschaft eine Speicherzelle geändert. Nicht erläutert wird, wie die für das Einschreiben mit hoher Datenrate erforderliche Einstellung der Parameter der Lichtenergie insbesondere auch im Hinblick auf die Polarsiationsausrichtung zu realisieren ist.

Es ist ebenfalls bekannt, eine kohärente Überlagerung bzw. Kopplung zur schnellen Modulation der Laserleistung zu verwenden, vgl. beispielsweise den Artikel "Coherent combining of second-harmonic generators by active phase control of the fundamental waves", A. Odier et al., Optics Letters 42 (16), 2017, 3201ff. In dem Artikel wird die aktive Phasenkontrolle bei der Grundwellenlänge genutzt, um die Überlagerung bei der frequenzkonvertierten Wellenlänge zu kontrollieren.

In der US2021/0119707 wird ein optischen Datenübertragungssystem beschrieben, bei dem ein Laser eine Vielzahl modulierbarer optischer Reflektoren aufweist und dazu eingerichtet ist, gegenseitig kohärente optische Strahlen von den modulierbaren optischen Reflektoren auszusenden. Ein optischer Leistungskombinierer weist einen ersten optischen Eingang auf, der zum Empfangen von Licht eines der optischen Strahlen, die von einem ersten der modulierbaren optischen Reflektoren ausgesandt werden, angeschlossen ist, und einen zweiten optischen Eingang, der zum Empfangen von Licht eines der optischen Strahlen, die von einem zweiten der modulierbaren optischen Reflektoren ausgesandt werden, angeschlossen ist. Eine elektronische Steuerung ist zum Betreiben des ersten und zweiten der modulierbaren optischen Reflektoren angeschlossen, um die von ihnen ausgesandten optischen Strahlen zu modulieren, um jeweils einen ersten und zweiten Datenstrom zu übertragen. Der optische Leistungskombinierer ist zum Interferieren des von dem ersten und zweiten der modulierbaren optischen Reflektoren empfangenen Lichts mit einer relativen Phasendifferenz angeschlossen.

Aus der DE 10 2017 104 392 A1 ist es bekannt, zur Modulation der Amplitude eines Ausgangslaserstrahls ein Interferometer als Überlagerungseinrichtung zu verwenden, bei dem eine relative Phasenlage von zwei Strahlkanälen des Interferometers zeitlich moduliert wird. Für den Fall, dass als Aufteilungselement zur Aufteilung des Eingangslaserstrahls und als Kombinationselement zur kohärenten Kombination Polarisationsstrahlteiler verwendet werden, führt die Modulation der relativen Phasenlage zu einer Modulation des Polarisationszustands des kohärent überlagerten Ausgangsstrahls. Mit Hilfe einer Wellenplatte und eines Polarisators kann in diesem Fall die Modulation des Polarisationszustands des Ausgangslaserstrahls in eine Modulation der Amplitude des Ausganglaserstrahls umgewandelt werden.

In der US 9,042,009 B2 ist eine passive Vorrichtung zur kohärenten Überlagerung beschrieben, die ein amplituden-aufteilendes Interferometer mit mindestens vier Zweigen aufweist.

### Aufgabe der Erfindung

Der Erfindung liegt die Aufgabe zugrunde ein optisches System mit einer Überlagerungseinrichtung bereitzustellen, die eine unabhängige Einstellung bzw. Modulation der Leistung und des Polarisationszustandes des kohärent überlagerten Ausgangslaserstahls ermöglicht.

### Gegenstand der Erfindung

Diese Aufgabe wird erfindungsgemäß durch ein optisches System mit einer Überlagerungseinrichtung der eingangs genannten Art gelöst, umfassend: eine Strahlquelle zur Erzeugung eines Laserstrahls, eine Aufteilungseinrichtung zur Aufteilung des Laserstrahls auf die vier zueinander kohärenten Eingangsstrahlen, eine Phasen-Modulationseinrichtung zur Modulation der relativen Phasenlagen der vier Eingangsstrahlen, sowie eine Überlagerungseinrichtung, , zur kohärenten Überlagerung der vier Eingangsstrahlen zu dem Ausgangsstrahl. Das optische System und auch die Überlagerungseinrichtung kann mit diskreten optischen Bauteilen, faseroptisch, integriert-optisch oder auch als Hybrid-System realisiert werden. Die Überlagerungseinrichtung umfasst vier Eingänge zum Eintritt jeweils eines der Eingangsstrahlen, einen Ausgang zum Austritt des Ausgangstrahls, eine erste Kombinationseinrichtung zur kohärenten Kombination des ersten Eingangsstrahls und des zweiten Eingangsstrahls zu einem ersten Überlagerungsstrahl, eine zweite Kombinationseinrichtung zur kohärenten Kombination des dritten Eingangsstrahls und des vierten Eingangsstrahls zu einem zweiten Überlagerungsstrahl, sowie eine dritte Kombinationseinrichtung zur Bildung des Ausgangsstrahls durch kohärente Kombination des ersten Überlagerungsstrahls und des zweiten Überlagerungsstrahls, wobei die Überlagerungseinrichtung ausgebildet ist, sowohl einen Polarisationszustand, insbesondere eine Polarisationsrichtung, als auch eine Leistung des Ausgangstrahls unabhängig voneinander in Abhängigkeit von relativen Phasenlagen der einzelnen Phasen der den vier Eingängen zugeführten Eingangsstrahlen zueinander einzustellen.

Bei der hier beschriebenen Überlagerungseinrichtung erfolgt eine zweistufige Überlagerung der vier Eingangsstrahlen, d.h. es werden zunächst jeweils zwei der Eingangsstrahlen zu einem von zwei Überlagerungsstrahlen überlagert und nachfolgend werden die beiden Überlagerungsstrahlen zu dem Ausgangsstahl überlagert. Bei den drei Kombinationseinrichtungen kann es sich um unterschiedliche optische Baugruppen bzw. um separate optische Bauteile handeln. Es ist aber auch möglich, dass ein- und dasselbe optische Element bzw. Bauteil die Funktion von zwei oder ggf. von allen drei Kombinationseinrichtungen übernimmt. In diesem Fall erfolgt die Überlagerung der jeweiligen Strahlen typischerweise an unterschiedlichen Positionen des optischen Elements bzw. Bauteils.

Anders als dies in der eingangs zitierten DE 10 2017 104 392 A1 der Fall ist, können bei der hier beschriebenen zweistufigen Überlagerungseinrichtung der Polarisationszustand und die Leistung des Ausgangsstrahls unabhängig voneinander eingestellt bzw. moduliert werden. Bei der Einstellung des Polarisationszustands des Ausgangsstrahls kann insbesondere eine lineare Polarisation des Ausgangsstrahls eingestellt werden, deren Polarisationsrichtung (Azimutwinkel) frei wählbar ist (von 0° bis 180°).

Bei der Überlagerungseinrichtung kann es sich um eine passive Einrichtung handeln, die keine optischen Elemente aufweist, deren optischen Eigenschaften eingestellt werden können. Für den Fall, dass die Überlagerungseinrichtung optische Elemente aufweist, deren optische Eigenschaften eingestellt werden können, z.B. Phasenschieber, optische Rotatoren, etc. dient eine solche Einstellung in der Regel nicht dazu, den Polarisationszustand und/oder die Leistung des Ausgangsstrahls dynamisch einzustellen bzw. zu modulieren, sondern typischerweise lediglich dazu, um unerwünschte, z.B. temperaturbedingte Veränderungen der optischen Eigenschaften der optischen Bauteile der Überlagerungseinrichtung zu korrigieren, um auf diese Weise z.B. eine vollständige konstruktive Interferenz der Eingangsstrahlen zu ermöglichen (s.u.).

Die Einstellung des Polarisationszustandes und/oder der Leistung des Ausgangslaserstrahls erfolgt typischerweise allein durch die Einstellung bzw. die Vorgabe der relativen Phasenlagen der einzelnen Phasen der Eingangsstrahlen zueinander. Da die absolute Phase der vier Eingangsstrahlen keine Rolle für die Überlagerung spielt, ist zur Einstellung der relativen Phasenlagen eine Phasen-Modulationseinheit ausreichend, welche ausgebildet ist, die Phasen von drei der vier Eingangsstrahlen einzustellen bzw. zu modulieren. Die Einstellung des Polarisationszustands und/oder der Leistung des Ausgangsstrahls durch die Vorgabe bzw. die Einstellung der (relativen) Phasenlagen der vier Eingangsstrahlen mit Hilfe der Phasen-Modulationseinheit kann hochdynamisch mit Schaltdauern z.B. im MHz-Bereich erfolgen.

Durch das schnelle Schalten insbesondere der Polarisation kann bei einer Anwendung zum Einschreiben von polarisationsbeeinflussenden Nanostrukturen in ein transparentes Material oder beim Ausrichtung von Dipoleigenschaften in einem transparenten Material mit ferroelektrischen Eigenschaften eine erhöhte Schreibrate ohne erweitertes Multiplexing erfolgen. Zudem können gegenüber Ansätzen zum Einschreiben, die auf einer Segmentierung der zu schreibenden Bereiche hinsichtlich der Polarisation beruhen, die optischen Anforderungen reduziert werden und typischerweise kann die Effizienz gesteigert werden. Auch gegenüber dem sequentiellen Einschreiben von Voxelfeldern mit jeweils gleicher Polarisation, wie er in der US 10,181,336 B1 beschrieben ist, kann eine gesteigerte Effizienz erreicht und bei gleicher Repetitionsfrequenz die effektive Schreibrate gesteigert werden. Auch gegenüber Ansätzen, die mit Hilfe eines SLMs eine 2D-Multispotverteilung mit unabhängiger Kontrolle der Leistung/Phase und der Polarisationsrichtung erlauben, wie dies beispielsweise in der US 10,236,027 B1 der Fall ist, ergeben sich die oben genannten Vorteile durch eine größere Modulationsrate sowie die unten genannten Vorteile, die sich daraus ergeben, dass die Modulation nicht im Nutz- bzw. Ausgangsstrahl erfolgt:
Durch die Anordnung der Phasen-Modulationseinheit vor der Überlagerungseinrichtung ist es nicht erforderlich, dass die Phasen-Modulationseinheit direkt aus einem Eingangsstrahl den Ausgangsstrahl mit den geforderten Ausgangsparametern bereitstellt. Dies erlaubt beispielsweise den Einsatz von weniger leistungstauglichen Komponenten für die Modulation der relativen Phasenlagen. Zusätzlich kann bei Eingangsstrahlen, die von einem Ultrakurzpulslaser erzeugt werden, die Leistung in der Phasen-Modulationseinheit durch das Schalten von zeitlich gedehnten Pulsen herabgesetzt werden. Auch können optische Komponenten mit erhöhten Verlusten eingesetzt werden, ohne dass sich dies stark negativ auf die Effizienz des Gesamtsystems auswirkt. Die Modulation der relativen Phasenlagen der Eingangsstrahlen kann zudem bei einer anderen Wellenlänge erfolgen als bei der Wellenlänge des Ausgangsstrahls.

Bevorzugt ist die Überlagerungseinrichtung ausgebildet, bei mindestens einer relativen Phasenlage der einzelnen Phasen der vier Eingangsstrahlen eine Leistung des Ausgangsstrahls einzustellen, die - abgesehen von parasitären Verlusten beim Durchtritt durch die optischen Bauteile der Überlagerungseinrichtung - der Summe der Leistungen der vier Eingangsstrahlen entspricht. Die Überlagerungseinrichtung ermöglicht es somit bei einer geeigneten Wahl der relativen Phasenlage der Eingangsstrahlen, am Ausgang eine vollständige konstruktive Interferenz der Eingangsstrahlen zu erzeugen, so dass der Ausgangsstrahl die maximal mögliche Leistung aufweist (100% der Summe der Leistungen der Eingangsstrahlen). Wie weiter oben beschrieben wurde, kann zusätzlich zur in diesem Fall maximalen Leistung des Ausgangsstrahls unabhängig davon der Polarisationszustand des Ausgangsstrahls eingestellt werden. Die Überlagerungseinrichtung ist typischerweise auch ausgebildet, die Leistung unabhängig vom Polarisationszustand zu modulieren, und zwar bis zu einer vollständigen destruktiven Interferenz der vier Eingangsstrahlen an dem Ausgang, d.h. bis zu einer Leistung des Ausgangsstrahls, die bei 0% der Summe der Leistungen der vier Eingangsstrahlen liegt.

Die Leistung der Eingangsstrahlen, die an den vier Eingängen in die Überlagerungseinrichtung eintreten, ist typischerweise bei allen vier Eingangsstrahlen im Wesentlichen gleich groß, d.h. die Leistung eines jeweiligen Eingangsstrahls dient nicht zur dynamischen Einstellung des Polarisationszustandes bzw. der Leistung des Ausgangsstrahls. Grundsätzlich kann jedoch von einer identischen Intensität der vier Eingangsstrahlen (in der Regel geringfügig) abgewichen werden, um die oben beschriebene vollständige konstruktive Interferenz der vier Eingangsstrahlen bei der Überlagerung zu dem Ausgangsstrahl zu gewährleisten. Dies kann beispielsweise erforderlich sein, wenn die Verluste der Eingangsstrahlen beim Durchlaufen der Überlagerungseinrichtung unterschiedlich groß sind.

Zusätzlich zu dem Ausgangsstrahl wird von der Überlagerungseinrichtung, genauer gesagt von mindestens einer Kombinationseinrichtung, in der Regel mindestens ein weiterer Strahl an einem weiteren ("invertierenden") Ausgang erzeugt, der als Diagnosestrahl verwendet werden kann. Der Diagnosestrahl weist typischerweise eine Polarisationsrichtung auf, die senkrecht zur Polarisationsrichtung des aus dem anderen Ausgang austretenden Strahls ausgerichtet ist. Auch die Summe der an dem Ausgang und an dem weiteren Ausgang austretenden Leistung ist konstant und hängt nicht von den relativen Phasenlagen der vier Eingangsstrahlen ab.

Der Diagnosestrahl kann daher beispielsweise dazu genutzt werden, um den Polarisationszustand und die Leistung des Ausgangsstrahls oder eines jeweiligen Überlagerungsstrahls zu ermitteln und zu überwachen. Der hierbei (indirekt) gemessene Ist-Wert des Polarisationszustands und der Ist-Wert der Leistung des Ausgangsstrahls kann dazu verwendet werden, um die Leistungen und die relativen Phasenlagen der Eingangsstrahlen anzupassen bzw. zu regeln, um den Soll-Wert des Polarisationszustands bzw. der Leistung des Ausgangsstrahls einzustellen. Zu diesem Zweck kann auch auf das bzw. die weiter oben beschriebenen einstellbaren optischen Bauteile der Überlagerungseinrichtung, z.B. in Form eines oder mehrerer Phasenschieber, optischer Rotatoren, etc. eingewirkt werden. Wie weiter oben beschrieben wurde, erfolgt eine solche Regelung typischerweise auf einer langsameren Zeitskala als die hochdynamische Einstellung der relativen Phasenlagen der Eingangsstrahlen.

Bei einer Ausführungsform weist/weisen die erste, die zweite und/oder die dritte Kombinationseinrichtung ein Interferometer, bevorzugt ein Mach-Zehnder-Interferometer, mit einem ersten Strahlkanal zur Propagation eines ersten Teilstrahls und einem zweiten Strahlkanal zur Propagation eines zweiten Teilstrahls auf. Grundsätzlich können alle drei Kombinationseinrichtungen ein Interferometer aufweisen bzw. als Interferometer ausgebildet sein. Bei einer Ausführungsform weist nur die dritte Kombinationseinrichtung ein Interferometer auf bzw. ist als Interferometer ausgebildet. Bei einer alternativen Ausführungsform weisen sowohl die erste als auch die zweite Kombinationseinrichtung, aber nicht die dritte Kombinationseinrichtung ein Interferometer auf oder sind als Interferometer ausgebildet.

Bei einer Weiterbildung umfasst das Interferometer der ersten Kombinationseinrichtung ein Aufteilungselement zur Aufteilung der kohärent überlagerten ersten und zweiten Eingangsstrahlen auf die beiden Teilstrahlen sowie ein Kombinationselement zur kohärenten Überlagerung der beiden Teilstrahlen zur Bildung des ersten Überlagerungsstrahls und/oder das Interferometer der zweiten Kombinationseinrichtung umfasst ein Aufteilungselement zur Aufteilung der zweiten und dritten kohärent überlagerten Eingangsstrahlen auf die beiden Teilstrahlen sowie ein Kombinationselement zur kohärenten Überlagerung der beiden Teilstrahlen zur Bildung des zweiten Überlagerungsstrahls. Wie weiter oben beschrieben wurde, weisen bei dieser Weiterbildung bevorzugt sowohl die erste Kombinationseinrichtung als auch die zweite Kombinationseinrichtung ein Interferometer auf, währen die dritte Kombinationseinrichtung bevorzugt kein Interferometer aufweist. Es versteht sich, dass das Aufteilungselement nicht nur zur Aufteilung der jeweiligen Eingangsstrahlen auf die beiden Teilstrahlen dient, sondern auch zu deren kohärenter Überlagerung.

Bei einer weiteren Ausführungsform umfasst das Interferometer der dritten Kombinationseinrichtung ein Aufteilungselement zur Aufteilung der ersten und zweiten kohärent überlagerten Überlagerungsstrahlen auf die beiden Teilstrahlen sowie ein Kombinationselement zur kohärenten Überlagerung der beiden Teilstrahlen zur Bildung des Ausgangsstrahls. Wie weiter oben beschrieben wurde, sind in diesem Fall die erste und zweite Kombinationseinrichtung bevorzugt nicht als Interferometer ausgebildet.

Mit Hilfe eines Interferometers, insbesondere eines Mach-Zehnder-Interferometers, können durch eine kontrollierte Anpassung der Phasen der einzelnen Eingangsstrahlen zueinander sowohl über eine reduzierte konstruktive Interferenz die Leistung des Ausgangsstrahls herabgesetzt als auch der Polarisationszustand bzw. die Polarisationsrichtung des Ausgangsstrahls eingestellt werden. Es versteht sich, dass mit Hilfe eines solchen Interferometers auch nur die Leistung oder nur der Polarisationszustand des Ausgangsstrahls eingestellt werden können. Das Interferometer weist in der Regel mindestens ein optisches Bauteil oder eine Kombination von optischen Bauteilen zur Phasen- und/oder Polarisationsanpassung zwischen den beiden Teilstrahlen bzw. zwischen den beiden Strahlkanälen auf, um sicherzustellen, dass bei geeigneter Wahl der relativen Phasenlage der beiden Teilstrahlen zueinander maximale konstruktive Interferenz an dem Kombinationselement auftritt, an dem die kohärente Überlagerung der beiden Teilstrahlen erfolgt. Das Kombinationselement des Interferometers erzeugt in der Regel bei der kohärenten Überlagerung der beiden Teilstrahlen einen Diagnosestrahl, der z.B. dazu eingesetzt werden kann, die Leistungen und die relativen Phasenlagen der beiden Teilstrahlen sowie die Phasenverschiebung zwischen den beiden Strahlkanälen des Interferometers zu bestimmen und ggf. auf die weiter oben beschriebene Weise anzupassen.

Bei einer weiteren Weiterbildung weist das Interferometer mindestens eine Polarisations-Beeinflussungseinrichtung zur bevorzugt fest vorgegebenen Beeinflussung eines Polarisationszustands, insbesondere einer Polarisationsrichtung, mindestens eines der Teilstrahlen auf. Wie weiter oben beschrieben wurde, kann durch eine geeignete Polarisations-Beeinflussungseinrichtung der Polarisationszustand eines oder beider Teilstrahlen so beeinflusst werden, dass bei mindestens einer Phasenlage der beiden Teilstrahlen relativ zueinander an dem Kombinationselement maximale konstruktive Interferenz auftritt. Unter einer fest vorgegebenen Beeinflussung des Polarisationszustands wird verstanden, dass keine dynamische Beeinflussung des Polarisationszustands erfolgt, da die dynamische Einstellung des Polarisationszustands und der Leistung des Ausgangsstrahls allein durch die Einstellung der relativen Phasenlagen der Eingangsstrahlen erfolgt. Die Polarisations-Beeinflussungseinrichtung kann aber grundsätzlich steuerbar ausgebildet sein, um unterschiedliche parasitäre Verluste in den beiden Strahlkanälen, thermische Effekte, etc. auszugleichen, wie dies weiter oben beschrieben ist.

Die Polarisations-Beeinflussungseinrichtung(en) sind bevorzugt als polarisationsdrehende optische Einrichtungen bzw. Elemente (Polarisations-Rotatoren) ausgebildet, insbesondere in Form von optischen Rotatoren, beispielsweise in Form von optischen Kristallen, die aufgrund ihrer kristallinen Struktur bei geeigneter Ausrichtung eine intrinsische Polarisationsrotation aufweisen, z.B. kristalliner Quarz, das in einem breiten Wellenlängenbereich von UV bis NIR eine hohe Transparenz und Leistungstauglichkeit aufweist. Grundsätzlich können auch Faraday-Rotatoren als Polarisationsbeeinflussungseinrichtung zum Einsatz kommen. Faraday-Rotatoren benötigen für die Polarisationsrotation jedoch ein externes Magnetfeld und sind daher in Herstellung und Betrieb aufwändiger als optische Kristalle. Für die vorliegende Anwendung ist es günstig bzw. notwendig, dass eine Polarisationsdrehung des bzw. der Teilstrahlen unabhängig von der Polarisationsrichtung des jeweiligen Teilstrahls erfolgt. Eine solche Polarisationsdrehung ist mit doppelbrechenden Verzögerungseinrichtungen, z.B. mit λ/2-Verzögerungselementen, typischerweise nicht möglich, da diese eine Drehung der Polarisationsrichtung nur bei einer vorgegebenen Polarisationsrichtung des jeweiligen Teilstrahls ermöglichen.

Bei einer Ausführungsform sind das Aufteilungselement und das Kombinationselement als Intensitätsstrahlteiler ausgebildet und das Interferometer weist als Polarisations-Beeinflussungseinrichtung mindestens eine polarisationsdrehende optische Einrichtung, insbesondere einen optischen Rotator, zur senkrechten Ausrichtung der Polarisationsrichtungen der beiden Teilstrahlen relativ zueinander auf. Unter einem Intensitätsstrahlteiler wird im Sinne dieser Anmeldung ein Strahlteiler verstanden, der eine Aufteilung oder Kombination von zwei oder mehr Teilstrahlen im Wesentlichen unabhängig von deren Polarisationszustand ermöglicht. Die hier beschriebenen Intensitätsstrahlteiler sind in der Regel als 50% -Strahlteiler ausgebildet, d.h. diese kombinieren zwei in den Intensitätsstrahlteiler eintretende Strahlen mit gleicher Gewichtung zu einem austretenden Strahl]. Der Intensitätsstrahlteiler kann beispielsweise in Form eines dielektrischen Schichtsystems auf der Oberfläche eines transparenten Substrats ausgeführt sein. Bei einer geeigneten Ausrichtung der Oberfläche zur Strahleinfallsrichtung kann die angestrebte polarisationsunabhängige Reflektivität und Transmission von im Wesentlichen jeweils 50% erreicht werden.

Im einfachsten Fall kann zur Ausrichtung der Polarisationsrichtungen der beiden Teilstrahlen ein optischer Rotator in einem der beiden Strahlkanäle des Interferometers angeordnet sein, der eine Drehung der Polarisationsrichtung des in diesem Strahlkanal propagierenden Teilstrahls um 90° bewirkt. Es versteht sich aber, dass auch zwei oder ggf. mehr als zwei polarisationsdrehende optische Einrichtungen bzw. Elemente in den Strahlkanälen des Interferometers angeordnet sein können, um die Polarisationsrichtungen der beiden Teilstrahlen unter einem Winkel von 90° relativ zueinander auszurichten.

Bei einer Weiterbildung dieser Ausführungsform ist die Überlagerungseinrichtung bzw. das optische System, in welches die Überlagerungseinrichtung integriert ist, dazu ausgebildet, dem Aufteilungselement des Interferometers den ersten und zweiten Eingangsstrahl, den dritten und vierten Eingangsstrahl oder den ersten und zweiten Überlagerungsstrahl mit zirkularer Polarisation und jeweils entgegengesetzter Drehrichtung zuzuführen. In den drei genannten Fällen umfasst die erste, die zweite bzw. die dritte Kombinationseinrichtung das Interferometer. Für den Fall, dass das Interferometer in die dritte Kombinationseinrichtung integriert ist, kann durch die Einstellung der relativen Phasenlage des ersten und des zweiten Eingangsstrahls in der ersten Kombinationseinrichtung sowie der relativen Phasenlage des dritten und vierten Eingangsstrahls in der zweiten Kombinationseinrichtung die Leistung des ersten sowie des zweiten Überlagerungsstrahls eingestellt werden. Für die Einstellung der Leistung des jeweiligen Überlagerungsstrahls kann die erste und/oder die zweite Kombinationseinrichtung beispielsweise einen Intensitätsstrahlteiler aufweisen. Der erste Eingangsstrahl und der zweite Eingangsstrahl sind in diesem Fall typischerweise zirkular polarisiert und weisen dieselbe Drehrichtung auf. Entsprechend sind auch der dritte und der vierte Eingangsstrahl zirkular polarisiert und weisen eine dem ersten und dem zweiten Eingangsstrahl entgegengesetzte Drehrichtung auf. Auf diese Weise kann die Leistung der beiden Überlagerungsstrahlen unabhängig voneinander eingestellt werden.

Für den Fall, dass der Ausgangsstrahl eine maximale Leistung aufweisen soll, ist es erforderlich, dass der erste und zweite Eingangsstrahl in der ersten Kombinationseinrichtung maximal konstruktiv zu dem ersten Überlagerungsstrahl interferieren und dass der dritte und vierte Eingangsstrahl in der zweiten Kombinationseinrichtung maximal konstruktiv zu dem zweiten Überlagerungsstrahl interferieren. Dies kann beispielsweise der Fall sein, wenn der erste und zweite Eingangsstrahl eine relative Phasenlage von 0° zueinander aufweisen oder - abhängig von dem Ausgang des Intensitätsstrahlteilers, aus dem der Überlagerungsstrahl austritt - wenn der erste und zweite Eingangsstrahl eine Phasenlage von 90° zueinander aufweisen. Für den Fall, dass sich die relative Phasenlage der Eingangsstrahlen, die in die Überlagerungseinrichtung eintreten, vor der Überlagerung zu dem jeweiligen Überlagerungsstrahl verändert, beispielsweise wenn bei einer Reflexion ein Phasensprung auftritt, ist die Phasenlage der Eingangsstrahlen entsprechend anzupassen, damit die relative Phasenlage im Überlagerungsstrahl 0° entspricht. Gleiches gilt für den dritten und vierten Eingangsstrahl und die zweite Kombinationseinrichtung.

Durch die Einstellung der relativen Phasenlage des ersten Überlagerungsstrahls und des zweiten Überlagerungsstrahls relativ zueinander kann die Polarisationsrichtung der linear polarisierten Teilstrahlen in den beiden Strahlkanälen des Interferometers vorgegeben werden. Die Polarisationsrichtungen der beiden nach der kohärenten Überlagerung an dem Aufteilungselement des Interferometers linear polarisierten Teilstrahlen sind senkrecht zueinander ausgerichtet. Um eine identische Ausrichtung der Polarisationsrichtungen der beiden Überlagerungsstrahlen an dem Kombinationselement des Interferometers zu bewirken, dient die polarisationsdrehende Einrichtung bzw. das polarisationsdrehende Element, das die Drehung der Polarisationsrichtung der beiden Teilstrahlen relativ zueinander um 90° bewirkt. Für den Fall, dass die beiden Überlagerungsstrahlen dieselbe Leistung aufweisen, wird am Ausgang der Überlagerungseinrichtung eine Ausgangsstrahl erzeugt, der linear polarisiert ist und dessen Polarisationsrichtung durch die Vorgabe der relativen Phasenlage zwischen dem ersten und dem zweiten Überlagerungsstrahl eingestellt werden kann. Für den Fall, dass die beiden Überlagerungsstrahlen eine maximale Leistung aufweisen, wird bei der Überlagerung an dem Kombinationselement des Interferometers ein Ausgangsstrahl mit maximaler Leistung erzeugt, die der Summe der Leistungen der Eingangsstrahlen entspricht Idealerweise findet bei der Überlagerung am Ausgang des Interferometers stets eine volle konstruktive Interferenz statt.

Bei einer alternativen Ausführungsform sind das Aufteilungselement und das Kombinationselement als Polarisationsstrahlteiler ausgebildet und das Interferometer weist als Polarisations-Beeinflussungseinrichtung zwei polarisationsdrehende optische Einrichtungen, insbesondere zwei optische Rotatoren zur Drehung einer Polarisationsrichtung jeweils eines der beiden Teilstrahlen um 45° auf. Im Gegensatz zu der weiter oben beschriebenen Ausführungsform, bei der es nicht darauf ankommt, auf welche Weise die Drehung der Polarisationsrichtung der beiden Teilstrahlen um 90° relativ zueinander auf die beiden Strahlkanäle aufgeteilt wird, ist es bei der Verwendung von Polarisationsstrahlteilern günstig, wenn die Drehung der Polarisationsrichtung in beiden Strahlkanälen symmetrisch erfolgt, d.h. wenn bei beiden Teilstrahlen eine Drehung um 45° erfolgt.

Bei dieser Ausführungsform handelt es sich bei den beiden Teilstrahlen, die in den beiden Strahlkanälen des Interferometers propagieren, typischerweise um elliptisch polarisierte Teilstrahlen. Durch die Drehung der Phasenlage der beiden Teilstrahlen um 45° kann ein linear polarisierter Ausgangsstrahl erzeugt werden, wobei bei geeigneter Wahl der relativen Phasenlage eine Überlagerung zu einem Ausgangsstrahl mit maximaler konstruktiver Interferenz erreicht werden kann. Beim hier beschriebenen Einsatz von Polarisationsstrahlteilern ist aufgrund der gegenüber Intensitätsstrahlteilern geringeren Symmetrie ein erhöhter Aufwand zur Sicherstellung maximaler konstruktiver Interferenz zu leisten. Bei der hier beschriebenen Ausführungsform werden zu diesem Zweck die beiden weiter oben beschriebenen optischen Rotatoren benötigt.

Bei einer Weiterbildung dieser Ausführungsform weist die Überlagerungseinrichtung mindestens zwei polarisationsbeeinflussende, insbesondere polarisationsdrehende optische Elemente, insbesondere in Form von optischen Rotatoren auf, die im Strahlweg vor dem Aufteilungselement des Interferometers angeordnet sind und die bevorzugt zur Drehung einer Polarisationsrichtung des ersten und zweiten Eingangsstrahls, des dritten und vierten Eingangsstrahls oder des ersten und zweiten Überlagerungsstrahls um 45° ausgebildet sind. Für den Fall, dass die dritte Überlagerungseinrichtung das Interferometer aufweist, kann jeweils ein polarisationsdrehendes optisches Element im Strahlweg des ersten und des zweiten Überlagerungsstrahls vor dem Aufteilungselement des Interferometers angeordnet sein.

Für den Fall, dass das Interferometer in die erste Kombinationseinrichtung oder in die zweite Kombinationseinrichtung integriert ist, kann ein jeweiliges polarisationsdrehendes Element im Strahlweg des ersten und des zweiten Eingangsstahls bzw. im Strahlweg des dritten und des vierten Eingangsstrahls angeordnet sein, bevor diese zu dem ersten bzw. zu dem zweiten Überlagerungsstrahl überlagert werden. Bei geeigneter Ausrichtung der Vorzugsachse(n) der Polarisationsstrahlteiler des Interferometers und der Polarisationsstrahlteiler der anderen Kombinationseinrichtungen (unter 45° zueinander) kann auf die weiteren polarisationsdrehenden optischen Einrichtungen verzichtet werden.

Bei der hier beschriebenen Ausführungsform, bei welcher das Aufteilungselement und das Kombinationselement als Polarisationsstrahlteiler ausgebildet sind, sind der erste und der zweite Eingangsstrahl typischerweise linear polarisiert und deren Polarisationsrichtungen sind um 90° zueinander gedreht. Entsprechend sind der dritte und der vierte Eingangsstrahl linear polarisiert und deren Polarisationsrichtungen sind um 90° zueinander gedreht. Bei der Einstellung der relativen Phasenlage des ersten und zweiten Eingangsstrahls und der relativen Phasenlage des dritten und vierten Eingangsstrahls wird typischerweise ein elliptisch polarisierter Überlagerungsstrahl erzeugt. Durch die Einstellung der Phasenlage des ersten und zweiten Eingangsstrahls relativ zueinander, der Phasenlage des dritten und vierten Eingangsstrahls relativ zueinander sowie der Phasenlage der beiden Überlagerungsstrahlen relativ zueinander in Kombination mit einer Drehung der Polarisationsrichtung der elliptischen Polarisation vor bzw. in dem Interferometer bzw. in den Interferometern können auch in diesem Fall die Leistung und der Polarisationszustand des Ausgangsstrahls unabhängig voneinander eingestellt werden.

Bei einer weiteren Ausführungsform weisen die erste Kombinationseinrichtung zur kohärenten Kombination des ersten Eingangsstrahls und des zweiten Eingangsstrahls, die zweite Kombinationseinrichtung zur kohärenten Kombination des dritten Eingangsstrahls und des vierten Eingangsstrahls und/oder die dritte Kombinationseinrichtung zur kohärenten Kombination des ersten Überlagerungsstrahls und des zweiten Überlagerungsstrahls einen Intensitätsstrahlteiler oder einen Polarisationsstrahlteiler auf. Bei dieser Ausführungsform weist die jeweilige Kombinationseinrichtung typischerweise kein Interferometer auf bzw. diese ist nicht als Interferometer ausgebildet. Die jeweilige Kombinationseinrichtung weist zur kohärenten Kombination des ersten und des zweiten Eingangsstrahls, des dritten und des vierten Eingangsstrahls bzw. des ersten und des zweiten Überlagerungsstrahls in der Regel genau einen Polarisationsstrahlteiler oder genau einen Intensitätsstrahlteiler auf.

Für den Fall, dass die Überlagerungseinrichtung kein Interferometer aufweist, ist es typischerweise erforderlich, dass sowohl die erste und zweite Kombinationseinrichtung einen Polarisationsstrahlteiler aufweisen oder dass die dritte Kombinationseinrichtung einen Polarisationsstrahlteiler aufweist. Es versteht sich, dass auch alle drei Kombinationseinrichtungen jeweils einen Polarisationsstrahlteiler aufweisen können. Soll der aus der jeweiligen Kombinationseinrichtung austretende Strahl eine lineare Polarisation aufweisen, ist typischerweise eine Phasenschiebeeinrichtung in Form einer λ/4-Verzögerungseinrichtung erforderlich, die im Strahlweg nach dem Polarisationsstrahlteiler angeordnet ist (s.u.).

Bei einer Weiterbildung dieser Ausführungsform ist die Überlagerungseinrichtung bzw. das optische System, in das diese integriert ist, ausgebildet, dem Intensitätsstrahlteiler den ersten und zweiten Eingangsstrahl, den dritten und vierten Eingangsstrahl oder den ersten und zweiten Überlagerungsstrahl mit einem jeweils identischen Polarisationszustand, insbesondere mit einer identischen Polarisationsrichtung, zuzuführen. Bei der kohärenten Kombination kann in diesem Fall die Leistung des aus dem Intensitätsstrahlteiler austretenden Strahls eingestellt werden, indem die relative Phasenlage der in den Intensitätsstrahlteiler eintretenden Strahlen eingestellt wird. Der (lineare) Polarisationszustand, insbesondere die Polarisationsrichtung, der in den Intensitätsstrahlteiler eintretenden Strahlen bleibt hierbei erhalten. Durch die Einstellung der relativen Phasenlage kann bei der kohärenten Kombination in dem Intensitätsstrahlteiler in der Regel sowohl maximale konstruktive Interferenz als auch maximale destruktive Interferenz bezogen auf den jeweiligen Überlagerungsstrahl bzw. Ausgangsstrahl erzeugt werden.

Bei einer weiteren Ausführungsform ist die Überlagerungseinrichtung bzw. das optische System, in das diese integriert ist, ausgebildet, dem Polarisationsstrahlteiler einen ersten und zweiten Eingangsstrahl, einen dritten und vierten Eingangsstrahl oder einen ersten und zweiten Überlagerungsstrahl zuzuführen, die jeweils zwei zueinander senkrechte Polarisationsrichtungen aufweisen.. Die Polarisatorachse(n) sind in diesem Fall typischerweise parallel zu den beiden zueinander senkrechten Polarisationsrichtungen ausgerichtet. Bei der kohärenten Kombination der in den Polarisationsstrahlteiler eintretenden Strahlen wird im allgemeinen Fall ein elliptisch polarisierter austretender Strahl gebildet, bei dem die Halbachsen (Vorzugsachsen bzw. -richtungen) der elliptischen Polarisation unter 45° zur den beiden zueinander senkrechten Polarisationsrichtungen der eintretenden Strahlen ausgerichtet ist. Durch eine mit der 45°-Vorzugsrichtung übereinstimmende Ausrichtung der Vorzugsachse einer λ/4-Verzögerungseinrichtung wird die elliptische Polarisation in eine lineare Polarisation konvertiert, deren Polarisationsrichtung durch das Hauptachsenverhältnis und den Drehsinn der elliptischen Polarisation bestimmt ist. Die Einstellung der relativen Phasenlage zwischen den in den Polarisationsstrahlteiler eintretenden Strahlen verändert das Aspektverhältnis zwischen den Halbachsen der elliptischen Polarisation, aber nicht die Ausrichtung der Halbachsen unter 45° zu den beiden zueinander senkrechten Polarisationsrichtungen. Die Polarisationskomponenten der in den Polarisationsstrahlteiler eintretenden Strahlen, die nicht parallel zu einer jeweiligen Polarisatorachse ausgerichtet sind, tragen nicht zur Leistung des austretenden Strahls bei. Durch die Ausrichtung der Polarisationsrichtung der in den Polarisationsstrahlteiler eintretenden Strahlen kann daher die Leistung des austretenden Strahls eingestellt werden.

Bei einer Weiterbildung ist die erste Kombinationseinrichtung zur Einstellung eines Polarisationszustands, insbesondere zur Drehung einer Polarisationsrichtung, des ersten Überlagerungsstrahls abhängig von einer relativen Phasenlage zwischen dem ersten, bevorzugt linear polarisierten Eingangsstrahl und dem zweiten, bevorzugt linear polarisierten Eingangsstrahl ausgebildet, und/oder die zweite Kombinationseinrichtung ist zur Einstellung eines Polarisationszustands, insbesondere zur Drehung einer Polarisationsrichtung, des zweiten Überlagerungsstrahls abhängig von einer relativen Phasenlage zwischen dem dritten, bevorzugt linear polarisierten Eingangsstrahl und dem vierten, bevorzugt linear polarisierten Eingangsstrahl ausgebildet, und/oder die dritte Kombinationseinrichtung ist zur Einstellung eines Polarisationszustands des Ausgangslaserstrahls, insbesondere zur Drehung einer Polarisationsrichtung des Ausgangslaserstrahls, abhängig von einer relativen Phasenlage zwischen dem ersten Überlagerungsstrahl und dem zweiten Überlagerungsstrahl ausgebildet. Bei der hier beschriebenen Weiterbildung weisen die erste, die zweite und/oder die dritte Kombinationseinrichtung zur kohärenten Kombination einen Intensitätsstrahlteiler oder einen Polarisationsstrahlteiler auf. Mit Hilfe geeigneter optischer Elemente kann in diesem Fall der Polarisationszustand eingestellt, insbesondere die Polarisationsrichtung eines jeweiligen Überlagerungsstrahls bzw. des Ausgangsstrahls gedreht werden.

Bei einer weiteren Weiterbildung weisen die erste, die zweite und/oder die dritte Kombinationseinrichtung zur Erzeugung einer linearen Polarisation des ersten Überlagerungsstrahls, des zweiten Überlagerungsstrahls und/oder des Ausgangsstrahls ein Phasenschiebeelement, insbesondere eine λ/4-Verzögerungseinrichtung auf, die im Strahlweg nach dem Intensitätsstrahlteiler oder dem Polarisationsstrahlteiler angeordnet ist. Bei der λ/4-Verzögerungseinrichtung kann es sich beispielsweise um eine λ/4-Verzögerungsplatte handeln, die λ/4-Verzögerungseinrichtungt kann aber auch auf andere Weise ausgebildet sein, beispielsweise als integriertes, z.B. faseroptisches Bauteil. Die λ/4-Verzögerungseinrichtung kann auch mehrere optische Bauteile aufweisen, um die phasenschiebende Wirkung zu erzeugen. Die optische Achse bzw. die Vorzugsrichtung der λ/4-Verzögerungseinrichtung ist typischerweise parallel zu einer der Halbachsen, beispielsweise zur langen Halbachse, der im Allgemeinen elliptischen Polarisation ausgerichtet, mit der ein jeweiliger Strahl in die λ/4-Verzögerungseinrichtung eintritt. Auf diese Weise ist sichergestellt, dass die λ/4-Verzögerungseinrichtung eine lineare Polarisation des jeweiligen austretenden Strahls erzeugt. Für den Fall, dass die λ/4-Verzögerungseinrichtung im Strahlweg nach einem Polarisationsstrahlteiler angeordnet ist, ist die optische Achse bzw. die Vorzugsrichtung der λ/4-Verzögerungseinrichtung typischerweise unter einem Winkel von 45° zur Polarisatorachse ausgerichtet.

Durch eine geeignete Wahl des Polarisationszustandes bzw. der Polarisationsrichtungen des ersten und zweiten Eingangsstrahls, des dritten und vierten Eingangsstrahls und/oder des ersten und zweiten Überlagerungsstrahls kann sichergestellt werden, dass die Ausrichtung der Hauptachsen des elliptischen Polarisationszustandes des in die λ/4-Verzögerungseinrichtung eintretenden Strahls stets unter 45° zur optischen Achse die λ/4-Verzögerungseinrichtung ausgerichtet ist. Wie weiter oben in Zusammenhang mit dem Polarisationsstrahlteiler beschrieben wurde, kann durch die Einstellung der relativen Phasenlage des ersten und zweiten Eingangsstrahls, des zweiten und dritten Eingangsstrahls bzw. des ersten und zweiten Überlagerungsstrahls relativ zueinander das Aspektverältnis des elliptischen Polarisationszustands eingestellt werden, was eine Drehung der Polarisationsrichtung des aus der λ/4-Verzögerungseinrichtung austretenden Strahls bewirkt.

Bei einer weiteren Ausführungsform sind die vier Eingänge zum Eintritt von mindestens vier weiteren Eingangsstrahlen und der Ausgang zum Austritt von mindestens einem aus den vier weiteren Eingangsstrahlen kohärent kombinierten weiteren Ausgangsstrahl ausgebildet. Grundsätzlich ist es möglich, mit Hilfe der Überlagerungseinrichtung aus einer Anzahl von 4 N Eingangsstrahlen durch kohärente Überlagerung eine Anzahl von N Ausgangsstrahlen zu erzeugen. Hierbei können einer jeweiligen ersten, zweiten und dritten Kombinationseinrichtung mehrere Gruppen von jeweils vier Eingangsstrahlen zugeführt werden, bei denen jeweils unabhängig voneinander die relative Phasenlage zueinander eingestellt wird, so dass für jeden Ausgangsstrahl die Leistung und der Polarisationszustand unabhängig voneinander eingestellt werden können. Im einfachsten Fall werden die Gruppen von jeweils vier Eingangsstrahlen den optischen Elementen der ersten, zweiten und dritten Kombinationseinrichtung lateral versetzt zugeführt, so dass die Eingangsstrahlen und auch die aus diesen gebildeten Überlagerungsstrahlen aller Gruppen jeweils ein- und dieselben optischen Elemente durchlaufen.

Bei der Strahlquelle des optischen Systems handelt es sich bevorzugt um einen Seed-Laser eines MOPA(Master Oscillator Power Amplifier)-Systems. In diesem Fall werden die vier Eingangsstrahlen durch Verstärkung des Seed-Laserstrahls erzeugt. Grundsätzlich ist es möglich, die Phasen-Modulationseinrichtung im Strahlweg direkt vor den Eingängen der Überlagerungseinrichtung anzuordnen. Für den Fall, dass es sich um ein MOPA-System handelt, ist es jedoch günstig, wenn die Einstellung der relativen Phasenlagen der vier Eingangsstrahlen mit Hilfe einer Phasen-Modulationseinrichtung erfolgt, die vor dem Endverstärker des MOPA-Systems angeordnet ist. Auf diese Weise können in der Phasen-Modulationseinrichtung optische Elemente verwendet werden, die weder eine hohe Leistungstauglichkeit noch eine hohe Effizienz aufweisen müssen. Die mittlere Leistung und/oder die Spitzen-Leistung des Ausgangstrahls kann bei einem solchen MOPA-System hoch sein und beispielsweise bei mehr als 1 W, 10 W, 1 kW, 10 kW oder auch 1 MW. liegen.

Der Ausgangsstrahl wird typischerweise einer Applikationseinrichtung des optischen Systems zugeführt, bei der es sich in der Regel um eine Bearbeitungseinrichtung zur Bearbeitung, z.B. um einen Bearbeitungskopf, zur Bearbeitung eines Werkstücks mit Hilfe des Ausgangsstrahls handelt. Für die Positionierung des bzw. der Ausgangsstrahlen (s.u.) relativ zum Werkstück können auch Translationseinheiten zur Bewegung des Bearbeitungskopfs und/oder des Werkstücks vorgesehen sein. Auch kann eine dynamische Strahlpositionierung (2 D, 2,5 D), eine räumlich-zeitliche Strahlformung, eine Lageerkennung (vor dem Prozess) und eine Prozesskontrolle (in-situ, ex-situ) erfolgen.

Bei der Zuführung des Ausgangsstrahls zum Werkstück kann in der Applikationseinrichtung auch eine Polarisationsbeeinflussung erfolgen. Beispielsweise kann die Applikationseinrichtung für die Zuführung des Ausgangsstrahls zu dem Werkstück eine doppelbrechende Komponente, z.B. eine optische Faser, insbesondere einen faserbasierten Verstärker, aufweisen. In diesem Fall kann die Überlagerungseinrichtung eine Vor-Kompensation der bei der Zuführung des Ausgangsstrahls zu dem Werkstück erzeugten Doppelbrechung vornehmen. Typischerweise wird die Vor-Kompensation vorgenommen, indem die relativen Phasenlagen, die durch die Phasen-Modulationseinrichtung eingestellt werden, geeignet angepasst werden, so dass sich am Werkstück die zu erzielende Kombination aus Polarisationszustand und Leistung des Ausgangsstrahls einstellt. Auf diese Weise können auch nicht polarisationserhaltende Transportfasern eingesetzt werden oder das MOPA-Konzept kann modifiziert werden, indem die Überlagerung vor dem (typischerweise faserbasieren) Endverstärker erfolgt, der in diesem Fall in die Applikationseinrichtung integriert ist.

Neben der oben beschriebenen Anwendung des optischen Systems für das Schreiben von Voxeln für die Datenspeicherung in transparenten Materialien kann das optische System u.a. auch für die Herstellung von optischen Komponenten basierend auf einer räumlich abhängigen Polarisationsmanipulation eingesetzt werden. Die schnelle Polarisationsänderung, die mit dem optischen System erzeugt wird, kann auch für andere Anwendungen, z.B. für Analyseverfahren, vorteilhaft eingesetzt werden.

Das optische System kann auch eine Konversionseinrichtung aufweisen, die zwischen der Phasen-Modulationseinrichtung und der Überlagerungseinrichtung angeordnet ist. Bei der Konversionseinrichtung kann es sich um eine optische Verstärkereinrichtung handeln, beispielsweise um den bzw. die Endverstärker des weiter oben beschriebenen MOPA-Systems. Die Konversionseinrichtung kann auch eine andere Funktion erfüllen.

Die Konversionseinrichtung kann beispielsweise zur Frequenzkonversion der Eingangsstrahlen ausgebildet sein. Dies ist günstig, da für den Ausgangsstrahl bzw. für die Applikation, für die der Ausgangsstrahl verwendet wird, häufig Wellenlängen interessant sind, für die kein leistungstaugliches Verstärkersystem, keine leistungstaugliche Phasen-Modulationseinrichtung oder andere optische Komponenten verfügbar sind. In diesem Fall kann die kohärente Kopplung in der Überlagerungseinrichtung mit einer in der Regel im Strahlweg vor der Überlagerungseinrichtung stattfindenden Frequenzkonversion kombiniert werden.

Das hier beschriebene optische System, insbesondere in Form eines MOPA-Systems, ist mit einer zwischen dem Strahlquelle und der Überlagerungsanordnung angeordneten Frequenzkonversionseinrichtung kompatibel.

Die Strahlquelle zur Erzeugung des Laserstrahls kann zur Erzeugung eines c/w-Laserstrahls und/oder eines gepulsten Laserstrahls ausgebildet sein. Die Strahlquelle kann insbesondere ausgebildet sein, einen Ultrakurzpuls-Laserstrahl mit Laserpulsen zu erzeugen, deren Pulsdauern in der Größenordnung von ps oder von fs liegen. Bei Ultrakurzpulslasern wird häufig die so genannte Chirped Pulse Amplification (CPA) eingesetzt, bei der zeitlich gestreckte Pulse verstärkt und nachfolgend komprimiert werden. Die CPA-Technologie kann mit der hier beschriebenen kohärenten Kopplung der vier Eingangsstrahlen zu dem Ausgangsstrahl und insbesondere mit der unabhängigen Einstellung des Polarisationszustands und der Leistung des Ausgangsstrahls kombiniert werden. In diesem Fall kann die Konversionseinrichtung beispielsweise einen Pulskompressor des CPA-Systems bilden. Die Konversionseinrichtung kann aber auch generell zur Pulsformung der in diesem Fall gepulsten Eingangsstrahlen ausgebildet sein.

Es versteht sich, dass die Konversionseinrichtung auch ausgebildet sein kann, mehrere der weiter oben beschriebenen Funktionen zu erfüllen bzw. dass das optische System mehrere Konversionseinrichtungen aufweisen kann.

Im Strahlweg zwischen der Strahlquelle und der Überlagerungseinrichtung, insbesondere im Strahlweg zwischen der Konversionseinrichtung und der Überlagerungseinrichtung, sowie im Strahlweg des Ausgangstrahls hinter der Überlagerungseinrichtung kann eine geeignete Strahlführung vorgesehen sein, die beispielsweise eine Scanneroptik umfassen kann.

Bei einer weiteren Ausführungsform ist die Aufteilungseinrichtung zur Aufteilung des Laserstrahls oder eines weiteren von der Strahlquelle erzeugten Laserstrahls auf mindestens vier weitere zueinander kohärente Eingangsstrahlen ausgebildet, die Phasen-Modulationseinheit ist zur Modulation der relativen Phasenlagen der mindestens vier weiteren Eingangsstrahlen ausgebildet und die Überlagerungseinrichtung ist zur kohärenten Überlagerung der mindestens vier weiteren Eingangsstrahlen zu mindestens einem weiteren Ausgangsstrahl ausgebildet.

Bei dieser Ausführungsform ist das optische System ausgebildet, aus mehreren Gruppen von jeweils vier Eingangsstrahlen durch kohärente Überlagerung jeweils einen Ausgangsstrahl zu bilden. Durch die kohärente Überlagerung können für jeden Ausgangsstrahl die Leistung und der Polarisationszustand unabhängig voneinander eingestellt werden, d.h. die Leistungen und die Polarisationszustände der Ausgangsstrahlen sind unabhängig voneinander modulierbar. Es ist aber auch möglich, dass in dem optischen System mehrere Ausgangsstrahlen erzeugt werden, bei denen die Leistungen und die Polarisationszustände nicht unabhängig voneinander modulierbar sind. Auch ein gleichzeitiges Umverteilen auf verschiedene Ausgangsstrahlen oder das Scannen von Ausgangsstrahlen basierend auf einer erweiterten kohärenten Kopplung sowie ein 2D- oder ein 3D-Multiplexing ist möglich.

Es versteht sich, dass das optische System zusätzlich ausgebildet sein kann, mindestens einen Ausgangsstrahl zu erzeugen, der nicht durch eine kohärente Überlagerung von Eingangsstrahlen erzeugt wird und bei dem die Leistung und/oder der Polarisationszustand nicht einstellbar sind. Die Verwendung eines solchen Ausgangsstrahls kann für bestimmte Anwendungen vorteilhaft sein.

Bei einer Ausführungsform ist das optische System ausgebildet, die vier Eingangsstrahlen und/oder die mindestens vier weiteren Eingangsstrahlen den vier Eingängen der Überlagerungseinrichtung mit im Wesentlichen gleicher Leistung zuzuführen. Wie weiter oben in Zusammenhang mit der Überlagerungseinrichtung beschrieben wurde, ist es für die kohärente Überlagerung günstig, wenn die vier zueinander kohärenten Eingangsstrahlen im Wesentlichen dieselbe Leistung bzw. Intensität aufweisen. Dies kann beispielsweise erreicht werden, wenn die Leistung eines Laserstrahls, der von der Strahlquelle erzeugt wird, in der Aufteilungseinrichtung zu gleichen Teilen auf die vier zueinander kohärenten Eingangsstrahlen aufgeteilt wird. Wie weiter oben beschrieben wurde, kann von einer identischen Leistung der vier Eingangsstrahlen abgewichen werden, wenn diese Durchlaufen der Überlagerungseinrichtung unterschiedliche Verluste erfahren. Die Leistung der einzelnen Eingangsstrahlen kann angepasst werden, um die unterschiedlichen Verluste beim Durchlaufen der Überlagerungseinrichtung zu kompensieren. Auf diese Weise kann erreicht werden, dass die aus den Eingangsstrahlen in den jeweiligen Überlagerungsstrahl sowie die aus den Überlagerungsstrahlen in den Ausgangsstrahl koppelbare Leistung übereinstimmt, so dass in den Überlagerungsstrahlen bzw. im Ausgangsstrahl ein idealerweise vollständiger Interferenzkontrast erzielbar ist.

Bei einer weiteren Ausführungsform ist das optische System ausgebildet, die vier Eingangsstrahlen und/oder die vier weiteren Eingangsstrahlen den vier Eingängen der Überlagerungseinrichtung mit linearer Polarisation mit einer vorgegebenen Polarisationsrichtung oder mit zirkularer Polarisation zuzuführen. Wie weiter oben in Zusammenhang mit der Überlagerungseinrichtung beschrieben wurde, ist es günstig, wenn die Eingangsstrahlen der Überlagerungseinrichtung mit einem definierten Polarisationszustand zugeführt werden.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1a-c: schematische Darstellungen von drei Ausführungsbeispielen einer Überlagerungseinrichtung, die zur kohärenten Überlagerung von vier zueinander kohärenten Eingangsstrahlen drei Kombinationseinrichtungen aufweist, von denen eine bzw. zwei als Mach-Zehnder-Interferometer ausgebildet sind,
- Fig. 2a-d: schematische Darstellungen von vier Überlagerungseinrichtungen analog zu Fig. 1a-c, bei denen mindestens eine Kombinationseinrichtung eine λ/4-Verzögerungseinrichtung aufweist, die im Strahlweg nach einem Intensitätsstrahlteiler oder einem Polarisationsstrahlteiler angeordnet ist,
- Fig. 3a,b: schematische Darstellungen von Überlagerungseinrichtungen analog zu Fig. 2b bzw. Fig. 2d, bei denen ein gemeinsamer Polarisationsstrahlteiler für zwei bzw. für alle drei Kombinationseinrichtungen verwendet wird,
- Fig. 4: eine schematische Darstellung einer Überlagerungseinrichtung analog zu Fig. 2d, die ausgebildet ist, drei Gruppen von jeweils vier zueinander kohärenten Eingangsstrahlen zu jeweils einem kohärenten Ausgangsstrahl zu überlagern,
- Fig. 5a-c: schematische Darstellungen von optischen Systemen, die eine Überlagerungseinrichtung gemäß Fig. 1a-c, Fig. 2a-d bzw. Fig. 3a,b aufweisen, sowie
- Fig. 6: eine schematische Darstellung eines optisches Systems, das eine Überlagerungseinrichtung gemäß Fig. 4 aufweist.

In der folgenden Beschreibung der Zeichnungen werden für gleiche bzw. funktionsgleiche Bauteile identische Bezugszeichen verwendet.

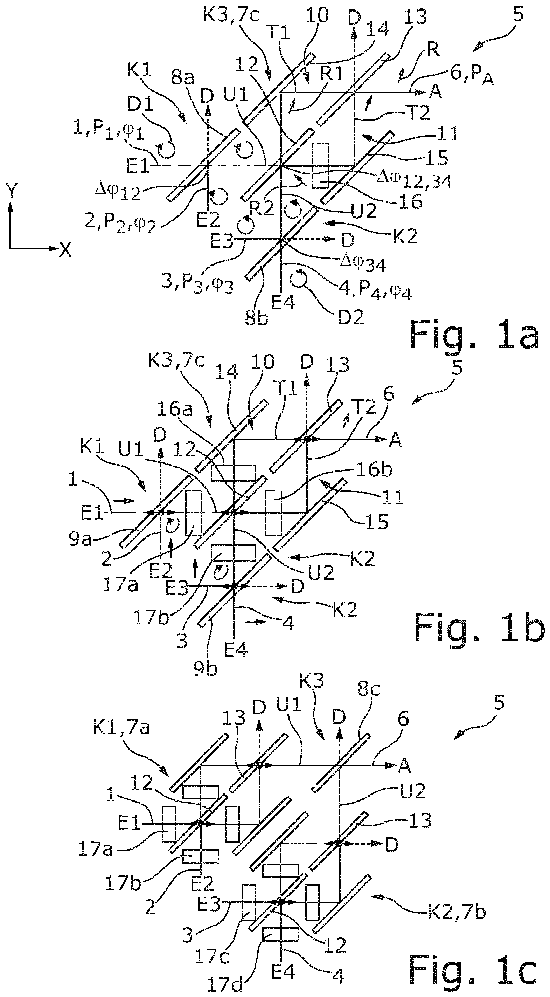

Fig. 1a-c zeigen jeweils eine Überlagerungseinrichtung 5 zur kohärenten Überlagerung von vier zueinander kohärenten Eingangsstrahlen 1 bis 4 zu einem überlagerten Ausgangsstrahl 6. Die Überlagerungseinrichtung 5 weist vier Eingänge E1 bis E4 auf, die zum Eintritt jeweils eines der vier Eingangsstrahlen 1 bis 4 dienen. Die Überlagerungseinrichtung 5 weist auch einen Ausgang A auf, der zum Austritt des bei der kohärenten Überlagerung gebildeten Ausgangsstrahls 6 dient. Die Überlagerungseinrichtung 5 ist ausgebildet, die vier Eingangsstrahlen 1 bis 4 kollinear zu überlagern, wobei in den gezeigten Beispielen eine deckungsgleiche Überlagerung zu dem Ausgangsstrahl 6 erfolgt.

Den in Fig. 1a-c gezeigten Überlagerungseinrichtungen 5 und auch den weiter unten beschriebenen Überlagerungseinrichtungen ist gemeinsam, dass diese es ermöglichen, eine Leistung P_{A} und einen Polarisationszustand des Ausgangsstrahls 6 unabhängig voneinander einzustellen. In den gezeigten Beispielen handelt es sich bei dem Polarisationszustand, der mit Hilfe der Überlagerungseinrichtung 5 eingestellt wird, um eine Polarisationsrichtung R eines linear polarisierten Ausgangsstrahls 6.

Während die Strahlverläufe in Fig. 1a-c und in den nachfolgenden Figuren in der Zeichenebene dargestellt sind, sind die Polarisationszustände in einer Propagationsrichtung senkrecht zur Zeichenebene dargestellt. Die X-Richtung der in Fig. 1a-c gezeigten Polarisationszustände entspricht hierbei der s-Komponente, die Y-Richtung der p-Komponente der Polarisation.

Die in Fig. 1a-c gezeigten Überlagerungseinrichtungen 5 und die weiter unten beschriebenen Überlagerungseinrichtungen 5 ermöglichen es, eine Leistung P_{A} des Ausgangsstrahls 6 einzustellen, die - abgesehen von parasitären Verlusten beim Durchtritt durch die optischen Elemente der Überlagerungseinrichtung 5 - der Summe der Leistungen P₁ bis P₄ der vier Eingangsstrahlen 1 bis 4 entspricht. Grundsätzlich kann die Leistung P_{A} des Ausgangsstrahls 6 kontinuierlich zwischen einem Wert, welcher der Summe der Leistungen P₁ bis P₄ der Eingangsstrahlen 1 bis 4, d.h. 100% der Eingangsleistung, und einem Wert von 0% der Eingangsleistungen P₁ bis P₄ der Eingangsstrahlen 1 bis 4 eingestellt werden.

Die unabhängige Einstellung der Leistung P_{A} und der Polarisationsrichtung R des Ausgangsstrahls 6 wird durch die Einstellung von relativen Phasenlagen Δφ_{1,2}; Δφ_{3,4}; Δφ_{12,34} der in Fig. 1a-c dargestellten Phasen φ₁, φ₂, φ₃, φ₄ der vier Eingangsstrahlen 1 bis 4 ermöglicht. Die unabhängige Einstellung der Leistung P_{A} und der Polarisationsrichtung R des Ausgangsstrahls 6 erfolgt typischerweise ausschließlich durch die Einstellung der relativen Phasenlagen Δφ_{1,2}; Δφ_{3,4}; Δφ_{12,34} der vier Eingangsstrahlen 1 bis 4, d.h. ohne dass zu diesem Zweck andere Parameter der vier Eingangsstrahlen 1 bis 4 oder Parameter von optischen Bauteilen der Überlagerungseinrichtung 5 verändert werden. Die Leistungen P₁ bis P₄ der vier Eingangsstrahlen 1 bis 4 sind in der Regel gleich groß bzw. diese werden unterschiedlich gewählt, um eine Vorkompensation von parasitäten Verlusten vorzunehmen. Die Leistungen P₁ bis P₄ der vier Eingangsstrahlen 1 bis 4 werden für die Einstellung ebenfalls nicht verändert. Da die relativen Phasenlagen Δφ_{1,2}; Δφ_{3,4}; Δφ_{12,34} der vier Eingangsstrahlen 1 bis 4 hoch dynamisch eingestellt werden können, kann auch die Leistung P_{A} und die Polarisationsrichtung R des Ausgangsstrahls 6 mit Hilfe der Überlagerungseinrichtung 5 hoch dynamisch eingestellt werden.

Den in Fig. 1a-c gezeigten und den weiter unten beschriebenen Überlagerungseinrichtungen 5 ist gemeinsam, dass diese zur Durchführung einer zweistufigen kohärenten Überlagerung mit Hilfe von drei Kombinationseinrichtungen K1 bis K3 ausgebildet sind: Eine erste Kombinationseinrichtung K1 dient zur kohärenten Kombination des ersten Eingangsstrahls 1 und des zweiten Eingangsstrahls 2 zu einem ersten Überlagerungsstrahl U1. Eine zweite Kombinationseinrichtung K2 dient zur kohärenten Kombination des dritten Eingangsstrahls 3 und des vierten Eingangsstrahls 4 zu einem zweiten Überlagerungsstrahl U2. Eine dritte Kombinationseinrichtung K3 dient zur Bildung des Ausgangsstrahls 6 durch eine kohärente Überlagerung des ersten Überlagerungsstrahls U1 und des zweiten Überlagerungsstrahls U2.

Die Eigenschaften des bei der kohärenten Kombination bzw. Überlagerung des ersten und des zweiten Eingangsstrahls 1, 2 in der ersten Kombinationseinrichtung K1 gebildeten ersten Überlagerungsstrahls U1 hängen von der relativen Phasenlage Δφ₁₂ des ersten und zweiten Eingangsstrahls 1, 2 ab, die der Phasendifferenz Δφ₁₂ = φ₁ - φ₂ zwischen der Phase φ₁ des ersten Eingangsstrahls 1 und der Phase φ₂ des zweiten Eingangsstrahls 2 entspricht. Entsprechend hängen die Eigenschaften des bei der kohärenten Kombination bzw. Überlagerung des dritten und vierten Eingangsstrahls 3, 4 in der zweiten Kombinationseinrichtung K2 gebildeten zweiten Überlagerungsstrahls U2 von der relativen Phasenlage Δφ₃₄ des dritten und vierten Eingangsstrahls 3, 4 ab, die der Phasendifferenz Δφ₃₄ = φ₃ - φ₄ zwischen der Phase φ₃ des dritten Eingangsstrahls 3 und der Phase φ₄ des vierten Eingangsstrahls 4 entspricht.

Die Eigenschaften des Ausgangsstrahls 6 hängen von den Eigenschaften des ersten Überlagerungsstrahls U1, den Eigenschaften des zweiten Überlagerungsstrahls U2 sowie der relativen Phasendifferenz Δφ_{12,34} zwischen dem ersten und zweiten Eingangsstrahl 1, 2 und dem dritten und vierten Eingangsstrahl 3, 4 ab. Da eine absolute Phase der vier Eingangsstrahlen 1 bis 4 bei der Bildung der relativen Phasenlagen Δφ₁₂; Δφ₃₄; Δφ_{12,34} keine Rolle spielt, kann die relative Phasendifferenz Δφ_{12,34} beispielsweise definiert werden als die Phasendifferenz Δφ_{12,34} = (φ₁ + φ₂) / 2 - (φ₃ + φ₄) / 2 zwischen dem ersten Eingangsstrahl 1 und dem dritten Eingangsstrahl 3 . Bei den Parametern, die zur unabhängigen Einstellung der Leistung P_{A} und der Polarisationsrichtung R bei der kohärenten Überlagerung eingestellt werden, handelt es sich somit um die drei hier beschriebenen relativen Phasenlagen Δφ₁₂; Δφ₃₄; Δφ_{12,34} der vier Eingangsstrahlen 1 bis 4.

Die in Fig. 1a-c gezeigten Überlagerungseinrichtungen 5 weisen jeweils mindestens eine Kombinationseinrichtung K1, K2, K3 auf, die ein Mach-Zehnder-Interferometer 7a-c bildet. Bei der in Fig. 1a,b gezeigten Überlagerungseinrichtung 5 ist die dritte Kombinationseinrichtung K3 als Mach-Zehnder-Interferometer 7c ausgebildet, bei dem in Fig. 1c gezeigten Beispiel sind die erste und die zweite Kombinationseinrichtung K1, K2 als Mach-Zehnder-Interferometer 7a,b ausgebildet.

Die in Fig. 1a gezeigte Überlagerungseinrichtung 5 weist eine erste Kombinationseinrichtung K1 auf, die zur kohärenten Überlagerung des ersten und des zweiten Eingangsstrahls 1, 2 zu dem ersten Überlagerungsstrahl U1 einen Intensitätsstrahlteiler 8a aufweist. Entsprechend weist auch die zweite Kombinationseinrichtung K2 der Überlagerungseinrichtung 5 einen Intensitätsstrahlteiler 8b zur kohärenten Überlagerung des zweiten und dritten Eingangsstrahls 3, 4 zu dem zweiten Überlagerungsstrahl U2 auf.

Wie weiter oben beschrieben wurde, ist die dritte Kombinationseinrichtung K3 als Mach-Zehnder-Interferometer 7c ausgebildet und weist einen ersten Strahlkanal 10 und einen zweiten Strahlkanal 11 auf. Das Mach-Zehnder-Interferometer 7c umfasst auch ein Aufteilungselement 12 zur kohärenten Überlagerung und Aufteilung der beiden Überlagerungsstrahlen U1, U2 auf einen ersten Teilstrahl T1, der in dem ersten Strahlkanal 10 propagiert, sowie auf einen zweiten Teilstrahl T2, der in dem zweiten Strahlkanal 11 propagiert. Ein Kombinationselement 13 dient zur kohärenten Überlagerung der beiden Teilstrahlen T1, T2 zur Bildung des Ausgangsstrahls 6. In dem ersten Strahlkanal 10 ist ein erster Reflektor 14 angeordnet, welcher den ersten Teilstrahl T1 um 90° zu dem Kombinationselement 13 umlenkt. Entsprechend ist in dem zweiten Strahlkanal 11 ein zweiter Reflektor 15 angeordnet, welcher den zweiten Teilstrahl T2 um 90° zu dem Kombinationselement 13 umlenkt.

Bei der in Fig. 1a gezeigten Überlagerungseinrichtung 5 sind das Aufteilungselement 12 und das Kombinationselement 13 als (nicht polarisierende) 50%-Intensitätsstrahlteiler ausgebildet. Das Mach-Zehnder-Interferometer 7c von Fig. 1a weist eine Polarisations-Beeinflussungseinrichtung in Form eines polarisationsdrehenden optischen Elements auf, bei dem es sich um einen optischen Rotator 16 in Form eines geeignet ausgerichteten Quarzkristalls handelt. Der optische Rotator 16 bewirkt eine Drehung einer Polarisationsrichtung R2 des zweiten Teilstrahls T2 um 90°, so dass die Polarisationsrichtung R2 des zweiten Teilstrahls T2 nach dem Durchlaufen des optischen Rotators 16 parallel zur Polarisationsrichtung R1 des ersten Teilstrahls T1 ausgerichtet ist. Es versteht sich, dass eine solche parallele Ausrichtung der beiden Teilstrahlen T1, T2 auch erreicht werden kann, wenn an Stelle eines einzigen optischen Rotators 16 zwei oder mehr optische Rotatoren in den jeweiligen Strahlkanälen 10, 11 angeordnet sind, die eine geeignete Drehung der jeweiligen Polarisationsrichtungen R1, R2 der beiden Teilstrahlen T1, T2 bewirken.

Bei der in Fig. 1a gezeigten Überlagerungseinrichtung 5 weisen die erste und zweite Kombinationseinrichtung K1, K2 zur kohärenten Überlagerung jeweils einen Intensitätsstrahlteiler 8a, 8b auf. Für die kohärente Überlagerung in der Überlagerungseinrichtung von Fig. 1a werden der ersten Kombinationseinrichtung K1 der erste Eingangsstrahl 1 und der zweite Eingangsstrahl 2 mit zirkularer Polarisation, d.h. mit einem zirkularen Polarisationszustand zugeführt. Entsprechend werden der zweiten Kombinationseinrichtung K2 der dritte Eingangsstrahl 3 und der vierte Eingangsstrahl 4 mit zirkularer Polarisation zugeführt. Eine Drehrichtung D1 des zirkularen Polarisationszustands des ersten und zweiten Eingangsstrahls 1, 2 verläuft entgegengesetzt zu einer Drehrichtung D2 des zirkularen Polarisationszustands des dritten und vierten Eingangsstrahls 3, 4.

Durch die Einstellung der relativen Phasenlage Δφ₁₂ zwischen dem ersten Eingangsstrahl 1 und dem zweiten Eingangsstrahl 2 lässt sich bei der kohärenten Überlagerung in dem Intensitätsstrahlteiler 8a der ersten Kombinationseinrichtung K1 der Wert der Leistung des ersten Überlagerungsstrahls U1 zwischen 0% und 100% der Summe aus den Leistungen P₁, P₂ des ersten und zweiten Eingangsstrahls 1, 2 einstellen. Entsprechend lässt sich durch die Einstellung der relativen Phasenlage Δφ₃₄ zwischen dem dritten Eingangsstrahl 1 und dem vierten Eingangsstrahl 2 bei der kohärenten Überlagerung in dem Intensitätsstrahlteiler 8b der zweiten Kombinationseinrichtung K2 der Wert der Leistung des ersten Überlagerungsstrahls U2 zwischen 0% und 100% der Summe aus den Leistungen P₃, P₄ des dritten und vierten Eingangsstrahls 3, 4 einstellen. Auf diese Weise kann die Leistung P_{A} bzw. die Intensität des Ausgangsstrahls 6 mit Hilfe der ersten und zweiten Kombinationseinrichtungen K1, K2 eingestellt werden.

Die Polarisationsrichtung R des Ausgangsstrahls 6 wird bei dem in Fig. 1a gezeigten Beispiel durch die Einstellung bzw. Vorgabe der Phasenlage Δφ_{12,34} zwischen den beiden Paaren von Eingangsstrahlen 1,2 und 3,4 eingestellt: Bei der kohärenten Überlagerung an dem Aufteilungselement 12 des Mach-Zehnder-Interferometers 7c der dritten Kombinationseinrichtung K3 werden aus den beiden gegenläufig zirkular polarisierten Überlagerungsstrahlen U1, U2 die beiden weiter oben beschriebenen linear polarisierten Teilstrahlen T1, T2 gebildet, deren Polarisationsrichtungen R1, R2 zunächst um 90° zueinander verdreht sind, aber mit Hilfe des optischen Rotators 16 parallel zueinander ausgerichtet werden, so dass der linear polarisierte Ausgangsstrahl 6 mit der gewünschten, unabhängig von der Leistung P_{A} einstellbaren Polarisationsrichtung R erzeugt wird.

Die in Fig. 1a gezeigte Überlagerungseinrichtung 5 weist drei Diagnoseausgänge D auf, die einen jeweiligen zweiten, invertierten Ausgang des ersten Intensitätsstrahlteilers 8a der ersten Kombinationseinrichtung K1, des zweiten Intensitätsstrahlteilers 8b der zweiten Kombinationseinrichtung K2 bzw. des Kombinationselements 13 der dritten Kombinationseinrichtung K3 bilden. An den drei Diagnoseausgängen D treten drei Diagnosestrahlen aus, die dazu verwendet werden können, den Polarisationszustand bzw. die Polarisationsrichtung R und die Leistung P_{A} des Ausgangsstrahls 6 oder eines jeweiligen Überlagerungsstrahls U1, U2 zu ermitteln und zu überwachen.

Dies ist möglich, weil die Summe der Leistung des Diagnosestrahls an dem Diagnoseausgang D und der Leistung an dem Ausgang A der dritten Kombinationseinrichtung K3 konstant und unabhängig von den relativen Phasenlagen Δφ₁₂; Δφ₃₄; Δφ_{12,34} ist. Die Polarisationsrichtung des Diagnosestrahls steht zudem senkrecht zur Polarisationsrichtung R des Ausgangsstrahls 6. Daher kann an dem Diagnoseausgang D der Ist-Wert der Polarisationsrichtung R und der Ist-Wert der Leistung P_{A} des Ausgangsstrahls 6 indirekt gemessen werden. Diese Messung kann dazu verwendet werden, um die jeweilige Leistung P₁ bis P₄ und die relativen Phasenlagen Δφ₁₂; Δφ₃₄; Δφ_{12,34} der Eingangsstrahlen 1 bis 4 anzupassen bzw. zu regeln, um den Soll-Wert der Polarisationsrichtung R bzw. der Leistung P_{A} des Ausgangsstrahls 6 einzustellen. Zu diesem Zweck kann auch auf den optischen Rotator 16 oder auf andere optische Bauelemente der Überlagerungseinrichtung 5 eingewirkt werden, die zu diesem Zweck einstellbar ausgebildet sein können. Eine Regelung mit Hilfe der Diagnoseausgänge D läuft aber typischerweise auf einer längeren Zeitskala ab als die hochdynamische Einstellung der relativen Phasenlagen Δφ₁₂; Δφ₃₄; Δφ_{12,34} der Eingangsstrahlen 1 bis 4.

Da der an dem Diagnoseausgang D austretende Diagnosestrahl zum Ausgangsstrahl 6 invertiert ist, kann dieser nicht nur zu Diagnosezwecken verwendet werden, sondern auch als weiterer Ausgangsstrahl, der wie der Ausgangsstrahl 6 in einer Applikation verwendet wird. Beispielsweise kann der Diagnoseausgang D bzw. der Diagnosestrahl bei einer Applikation, die im Schreiben von Voxeln zur optischen Datenspeicherung im Volumen transparenter Materialien besteht, zum parallelen Schreiben von "invertierten" Voxeln verwendet werden, die zur Verbesserung der Datensicherheit und zur Fehlerkorrektur beim Auslesen der Daten genutzt werden können. Gleiches gilt auch für die Diagnoseausgänge D der weiter unten beschriebenen Überlagerungseinrichtungen 5.

Fig. 1b zeigt eine Überlagerungseinrichtung 5, die sich von der in Fig. 1a gezeigten Überlagerungseinrichtung 5 im Wesentlichen dadurch unterscheidet, dass die erste Kombinationseinrichtung K1 und die zweite Kombinationseinrichtung K2 einen Polarisationsstrahlteiler 9a bzw. 9b an Stelle der in Fig. 1a gezeigten Intensitätsstrahlteiler 8a,b aufweisen. Auch das Aufteilungselement 12 und das Kombinationselement 13 des Mach-Zehnder-Interferometers 7c sind bei dem in Fig. 1b gezeigten Beispiel als Polarisationsstrahlteiler ausgebildet. Die Polarisationsstrahlteiler 9a,b, 12, 13 sind in Fig. 1b und in den nachfolgenden Figuren mit einem Punkt und einem Doppelfeil (s/p-Polarisation) gekennzeichnet, um diese von den Intensitätsstrahlteilern zu unterscheiden.

Die in Fig. 1b gezeigte Überlagerungseinrichtung 5 unterscheidet sich von der in Fig. 1a gezeigten Überlagerungseinrichtung auch dadurch, dass das Interferometer 7c zwei Polarisations-Beeinflussungseinrichtungen in Form von zwei polarisationsdrehenden optische Rotatoren 16a,b aufweist, die zur Drehung einer Polarisationsrichtung R1, R2 jeweils eines der beiden Teilstrahlen T1, T2 um 45° ausgebildet sind und die in dem ersten Strahlkanal 10 bzw. in dem zweiten Strahlkanal 11 angeordnet sind.

Die in Fig. 1b gezeigte Überlagerungseinrichtung 5 unterscheidet sich von der in Fig. 1a gezeigten Überlagerungseinrichtung zudem dadurch, dass im Strahlweg nach einem jeweiligen Polarisationsstrahlteiler 9a,b der ersten bzw. der zweiten Kombinationseinrichtung K1, K2 jeweils ein weiteres polarisationsdrehendes optisches Element 17a,b zur Drehung der Polarisationsrichtung des ersten Überlagerungsstrahls U1 um 45° sowie zur Drehung der Polarisationsrichtung des zweiten Überlagerungsstrahls U2 um 45° angeordnet ist.

Wie in Fig. 1b zu erkennen ist, sind der erste und zweite Eingangsstrahl 1, 2, die der ersten Kombinationseinrichtung K1 zugeführt werden, linear polarisiert und deren Polarisationsrichtungen sind senkrecht zueinander ausgerichtet. Entsprechend sind auch der dritte und vierte Eingangsstrahl 3, 4, die der zweiten Kombinationseinrichtung K2 zugeführt werden, linear polarisiert und deren Polarisationsrichtungen sind senkrecht zueinander ausgerichtet. Wie in Fig. 1b angedeutet ist, wird im allgemeinen Fall aus dem ersten und zweiten Eingangsstrahl 1,2 einer erster, elliptisch polarisierter Überlagerungsstrahl U1 gebildet, dessen Polarisationsrichtung (lange Halbachse der elliptischen Polarisation) mit Hilfe des weiteren optischen Rotators 17a der ersten Kombinationseinrichtung K1 um 45° gedreht wird und aus dem dritten und vierten Eingangsstrahl 3, 4 wird ein zweiter, elliptisch polarisierter Überlagerungsstrahl U2 gebildet, dessen Polarisationsrichtung mit Hilfe des weiteren optischen Rotators 17b der zweiten Kombinationseinrichtung K2 um 45° gedreht wird.

Die in Fig. 1b gezeigte Überlagerungseinrichtung 5 ermöglicht in analoger Weise zu der in Fig. 1a gezeigten Überlagerungseinrichtung 5 eine unabhängige Einstellung der Leistung P_{A} und der Polarisationsrichtung R des Ausgangsstrahls 6. Wie in Fig. 1b zu erkennen ist, weist die Überlagerungseinrichtung 5 nur einen einzigen "invertierenden" Diagnoseausgang D an der dritten Kombinationseinrichtung K3 auf.

Abweichend von der Darstellung in Fig. 1b kann auf die weiteren optischen Rotatoren 17a,b in der ersten und zweiten Kombinationseinrichtung 17a,b verzichtet werden, wenn die Vorzugsachsen des Polarisationsstrahlteiler 9a,b in der ersten und zweiten Kombinationseinrichtung K1, K2 relativ zu den Vorzugsachsen des als Polarisationsstrahlteiler ausgebildeten Aufteilungselements 12 und Kombinationselements 13 der dritten Kombinationseinrichtung K3 um 45° zueinander verdreht sind .

Fig. 1c zeigt eine Überlagerungseinrichtung 5, die sich von der in Fig. 1b gezeigten Überlagerungseinrichtung 5 dadurch unterscheidet, dass nicht die dritte Kombinationseinrichtung K3, sondern die erste und die zweite Kombinationseinrichtung K1, K2 als Mach-Zehnder-Interferometer 7a,b ausgebildet sind. Bei dem in Fig. 1c gezeigten Beispiel sind im Strahlweg des ersten und zweiten Eingangsstrahls 1, 2 vor dem Aufteilungselement 12 des Interferometers 7a der ersten Kombinationseinrichtung K1 jeweils ein weiterer optischer Rotator 17a,b angeordnet, die eine Drehung der jeweiligen Polarisationsrichtung um 45° bewirken. Entsprechend sind auch im Strahlweg des dritten und vierten Eingangsstrahls 3, 4 vor dem Aufteilungselement 12 des Interferometers 7b der zweiten Kombinationseinrichtung K2 jeweils ein weiterer optischer Rotator 17c,d angeordnet, die eine Drehung der Polarisationsrichtung um 45° bewirken. Die in der ersten und zweiten Kombinationseinrichtung K1, K2 gebildeten Überlagerungsstrahlen U1, U2 werden in einer dritten Kombinationseinrichtung K3 kohärent überlagert, die als Intensitätsstrahlteiler 8c ausgebildet ist. Die Polarisationsrichtungen der vier Eingangsstrahlen 1 bis 4 von Fig. 1c entsprechen den Polarisationsrichtungen der vier Eingangsstrahlen 1 bis 4 von Fig. 1b.

Wie weiter oben beschrieben wurde, können mit Hilfe der in Fig. 1a-c beschriebenen Überlagerungseinrichtungen 5, bei denen jeweils mindestens eine der Kombinationseinrichtungen K1 bis K3 ein Interferometer 7a-c aufweist, die Polarisationsrichtung R und die Leistung P_{A} des Ausgangstrahls 6 unabhängig voneinander allein durch die Einstellung der relativen Phasenlagen Δφ₁₂; Δφ₃₄; Δφ_{12,34} eingestellt werden. Die in Fig. 1a-c gezeigten Überlagerungseinrichtungen 5 können auch mit Hilfe von Interferometern durchgeführt werden, bei denen es sich nicht um Mach-Zehnder-Interferometer 7a-c handelt.

Bei der in Fig. 1a gezeigten Überlagerungseinrichtung 5 wurden nur Intensitätsstrahlteiler 8a,b, 12, 13 verwendet, bei der in Fig. 1b gezeigten Überlagerungseinrichtung 5 wurden nur Polarisationsstrahlteiler 9a,b, 12, 13 verwendet. Es versteht sich aber, dass auch Kombinationen aus Polarisations- und Intensitätsstrahlteilern verwendet werden können, wie dies beispielsweise bei der Überlagerungseinrichtung 5 von Fig. 1c der Fall ist. Die in Fig. 1a-c gezeigten Überlagerungseinrichtungen 5 sind konzeptionell grundsätzlich skalierbar, kaskadierbar und bezüglich der Reihenfolge der Interferometer 7a,b,c und der anderen Überlagerungskomponenten flexibel.

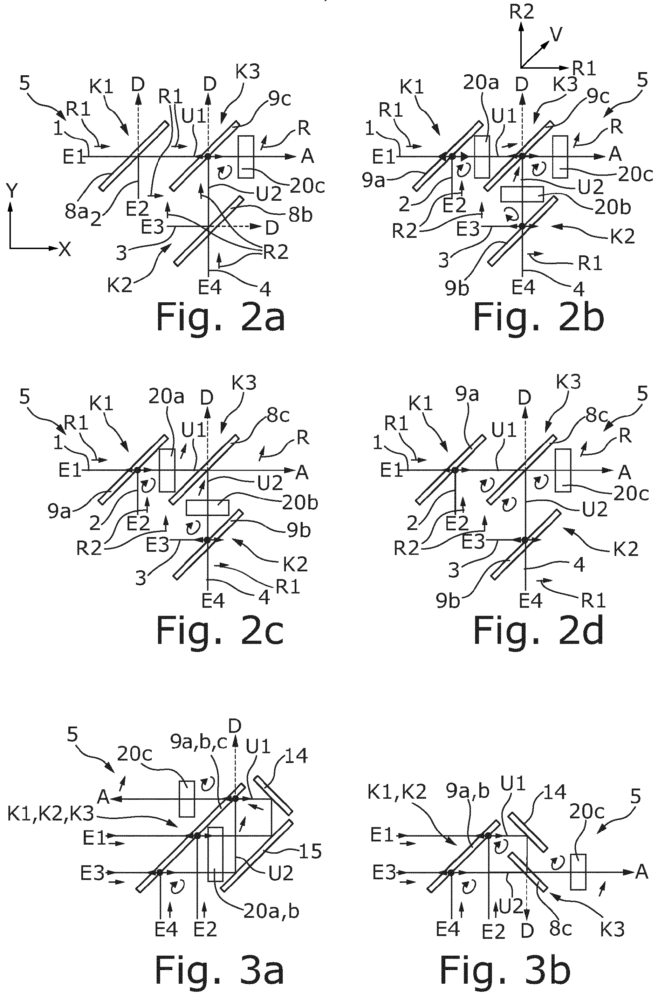

Fig. 2a-d zeigen Beispiele von Überlagerungseinrichtungen 5, die ebenfalls die unabhängige Einstellung von Polarisationsrichtung R und Leistung P_{A} des Ausgangsstrahls 6 ermöglichen und bei denen ebenfalls eine maximale konstruktive Interferenz der vier Eingangsstrahlen 1 bis 4 erzeugt werden kann. Bei den in Fig. 2a-d gezeigten Überlagerungseinrichtungen 5 wird zu diesem Zweck im Gegensatz zu den in Fig. 1a-c gezeigten Beispiel kein Interferometer 7a-c benötigt.

Den in Fig. 2a-d gezeigten Überlagerungseinrichtungen 5 ist gemeinsam, dass die erste, zweite und dritte Kombinationseinrichtung K1, K2, K3 zur kohärenten Überlagerung des ersten und zweiten Eingangsstrahls 1, 2, des dritten und vierten Eingangsstrahls 3, 4 sowie des ersten und zweiten Überlagerungsstrahls U1, U2 jeweils entweder einen Intensitätsstrahlteiler 8a-c oder einen Polarisationsstrahlteiler 9a-c aufweisen. Für die kohärente Überlagerung ist es typischerweise erforderlich, dass mindestens eine Kombinationseinrichtung K1, K2, K3 einen Polarisationsstrahlteiler 9a-c aufweist. Bei der in Fig. 2a gezeigten Überlagerungseinrichtung 5 weist die dritte Kombinationseinrichtung K3 einen Polarisationsstrahlteiler 9c auf, bei den in Fig. 2b-d gezeigten Überlagerungseinrichtungen 5 weisen die erste und zweite Kombinationseinrichtung K1, K2 jeweils einen Polarisationsstrahlteiler 9a, 9b auf. Eine Aufteilung auf zwei Teilstrahlen T1, T2, wie dies bei den Interferometern 7a-c von Fig. 1a-c der Fall ist, erfolgt bei den Kombinationseinrichtungen K1 bis K3 der in Fig. 2a-d gezeigten Überlagerungseinrichtungen 5 nicht.

Den in Fig. 2a-d gezeigten Überlagerungseinrichtungen 5 ist zudem gemeinsam, dass mindestens eine der ersten, zweiten und dritten Kombinationseinrichtungen K1, K2, K3 zur Erzeugung einer linearen Polarisation des ersten Überlagerungsstrahls U1, des zweiten Überlagerungsstrahls U2 bzw. des Ausgangsstrahls 6 ein Phasenschiebeelement, in den gezeigten Beispielen in Form einer λ/4-Verzögerungseinrichtungs 20a-c aufweisen, die im Strahlweg nach dem Intensitätsstrahlteiler 8a-c oder dem Polarisationsstrahlteiler 9a-c der jeweiligen Kombinationseinrichtung K1 bis K3 angeordnet ist. Die λ/4-Verzögerungseinrichtung 20a-c ermöglicht es, durch eine Einstellung einer Phasendifferenz Δφ₁₂; Δφ₃₄; Δφ_{12,34} zwischen dem ersten und zweiten Eingangsstrahl 1,2, dem dritten und vierten Eingangsstrahl 3, 4 bzw. dem ersten und zweiten Überlagerungsstrahl U1, U2 die Polarisationsrichtung R1, R2, R des bei der kohärenten Überlagerung gebildeten ersten Überlagerungsstrahls U1, des zweiten Überlagerungsstrahls U2 bzw. des Ausgangsstrahls 6 zu drehen. In Kombination mit der jeweils anderen Stufe bei der zweistufigen Überlagerung resultiert dadurch eine zusätzliche Einstellbarkeit der Leistung P_{A} des Ausgangsstrahls 6.

Bei den in Fig. 2a-d gezeigten Überlagerungseinrichtungen 5 werden einem jeweiligen Intensitätsstrahlteiler 8a-c der ersten, zweiten bzw. dritten Kombinationseinrichtung K1, K2, K3 die eintretenden Strahlen jeweils mit einem identischen Polarisationszustand, in Fig. 2a-c mit einer identischen Polarisationsrichtung, zugeführt:
Bei der in Fig. 2a gezeigten Überlagerungseinrichtung 5 weisen der erste und zweite Eingangsstrahl 1, 2, die in dem Intensitätsstrahlteiler 8a der ersten Kombinationseinrichtung K1 kohärent überlagert werden, jeweils eine lineare Polarisation mit identischer Polarisationsrichtung auf. Entsprechend weisen auch der dritte und vierte Eingangsstrahl 3, 4 der zweiten Kombinationseinrichtung K2 der Überlagerungseinrichtung 5 von Fig. 2a jeweils einen linearen Polarisationszustand mit identischer Polarisationsrichtung auf. Bei der in Fig. 2c und gezeigten Überlagerungseinrichtung 5 weisen die beiden Überlagerungsstrahlen U1, U2, die dem Intensitätsstrahlteiler 8c der dritten Kombinationseinrichtung K3 zugeführt werden, einen linearen Polarisationszustand mit gleicher Polarisationsrichtung auf. Bei der in Fig. 2d gezeigten Überlagerungseinrichtung 5 werden der dritten Kombinationseinrichtung K3 der erste und zweite Überlagerungsstrahl U1, U2 jeweils mit einem jeweils identischen elliptischen Polarisationszustand zugeführt.

Für den Fall, dass eine jeweilige Kombinationseinrichtung K1 bis K3 einen Polarisationsstrahlteiler 9a-c zur kohärenten Überlagerung aufweist, sind die Polarisationsrichtungen R1, R2 der in diesen eintretenden Strahlen bei den in Fig. 2a-d gezeigten Beispielen senkrecht zueinander ausgerichtet: Bei den in Fig. 2a,b gezeigten Überlagerungseinrichtungen 5, bei denen die dritte Kombinationseinrichtung K3 zur kohärenten Überlagerung einen Polarisationsstrahlteiler 9c aufweist, sind die Polarisationsrichtungen R1, R2 des ersten und zweiten Überlagerungsstrahls U1, U2 senkrecht zueinander ausgerichtet. Gleiches gilt für die in Fig. 2b dargestellte Überlagerungseinrichtung 5. Dies ist erforderlich, um eine Leistung P_{A} des Ausgangsstrahls 6 von 100% oder von 0% der Summe der Leistungen P₁ bis P₄ der Eingangsstrahlen 1 bis 4 zu erzeugen, d.h. um die Interferenz zu maximieren, um eine vollständige konstruktive Interferenz bzw. eine vollständige destruktive Interferenz einstellen zu können. Für den Fall, dass die Umlenkeinrichtung 5 keine maximale bzw. minimale konstruktive Interferenz erzeugen soll, kann von einer senkrechten Ausrichtung der Polarisationsrichtungen R1, R2 ggf. abgewichen werden. Ebenso sind bei den in Fig. 2b-d gezeigten Überlagerungseinrichtungen 5 die Polarisationsrichtungen R1, R2 des ersten und zweiten Eingangsstrahls 1, 2 bzw. des dritten und vierten Eingangsstrahls 3, 4, die in den jeweiligen Polarisationsstrahlteiler 9a,b der ersten bzw. der zweiten Kombinationseinrichtung K1, K2 eintreten, jeweils senkrecht zueinander ausgerichtet. Die Polarisatorachsen der Polarisationsstrahlteiler 9a-c der Kombinationseinrichtungen K1, K2, K3 der Überlagerungseinrichtungen 5 von Fig. 2a-d sind jeweils parallel zu den Polarisationsrichtungen R1, R2 der jeweiligen Eingangsstrahlen 1 bis 4 ausgerichtet.

Bei der in Fig. 2a gezeigten Überlagerungseinrichtung 5 kann mit Hilfe der ersten Kombinationseinrichtung K1 die Leistung des ersten Überlagerungsstrahls U1 durch die Einstellung der relativen Phasenlage Δφ₁₂ zwischen dem ersten Eingangsstrahl 1 und dem zweiten Eingangsstrahl 2 zwischen 0% und 100 % der Summe der Leistungen P₁, P₂ der beiden Eingangsstrahlen 1, 2 eingestellt werden. Gleiches gilt für den zweiten Überlagerungsstrahl U2, dessen Leistung in Abhängigkeit von der relativen Phasenlage Δφ₃₄ zwischen dem dritten und vierten Eingangsstrahl 3, 4 eingestellt wird. Die relative Phasenlage Δφ₁₂ zwischen dem ersten und zweiten Eingangsstrahl 1, 2 und die relative Phasenlage Δφ₃₄ zwischen dem dritten und vierten Eingangsstrahl 3, 4 wird bevorzugt gleich groß gewählt, so dass die beiden Überlagerungsstrahlen U1, U2 mit gleicher. Leistung auf den Polarisationsstrahlteiler 9c der dritten Kombinationseinrichtung K3 treffen.

Durch die Einstellung der relativen Phasenlage Δφ_{12,34} zwischen dem ersten Überlagerungsstrahl U1 und dem zweiten Überlagerungsstrahl U2 wird die Elliptizität, genauer gesagt das Aspektverhältnis zwischen den beiden Halbachsen der elliptischen Polarisation am Ausgang des Polarisationsstrahlteilers 9c der dritten Kombinationseinrichtung K3 eingestellt. Aufgrund der parallelen Ausrichtung der Polarisatorachsen des Polarisationsstrahlteilers 9c zu den Polarisationsrichtungen R1, R2 der beiden Überlagerungsstrahlen U1, U2 wird bei der kohärenten Überlagerung in dem Polarisationsstrahlteiler 9c der dritten Kombinationseinrichtung K3 eine elliptische Polarisation erzeugt, deren Halbachsen unter 45° zu den Polarisationsrichtungen R1, R2 der beiden Überlagerungsstrahlen U1, U2 ausgerichtet sind. Durch die im Strahlweg nachfolgende λ/4-Verzögerungseinrichtung 20c, die im gezeigten Beispiel als λ/4-Platte ausgebildet ist und deren Vorzugsrichtung parallel zur Vorzugsrichtung der elliptischen Polarisation (d.h. bei dem in Fig. 2b gezeigten Beispiel unter 45° zu den Polarisatorachsen bzw. den Polarisationsrichtungen R1, R2) ausgerichtet ist, wird die elliptische Polarisation in eine lineare Polarisation des Ausgangsstrahls 6 umgewandelt. Die Polarisationsrichtung R des Ausgangstrahls 6 ist vom Aspektverhältnis der elliptischen Polarisation abhängig und kann daher durch die Einstellung der relativen Phasenlage Δφ_{12,34} eingestellt werden.

Bei der in Fig. 2b gezeigten Überlagerungseinrichtung 5 weisen die erste und die zweite Kombinationseinrichtung K1, K2 an Stelle eines Intensitätsstrahlteilers 8a,b jeweils einen Polarisationsstrahlteiler 9a,b auf, dem jeweils eine λ/4-Verzögerungseinrichtung 20a,b in Form einer λ/4-Platte nachgeschaltet ist. Die Funktionsweise der ersten und zweiten Kombinationseinrichtung K1, K2 entspricht derjenigen der dritten Kombinationseinrichtung K3 von Fig. 2a: Aus dem ersten und zweiten Eingangsstrahl 1, 2 wird ein Überlagerungsstrahl U1 gebildet, der zunächst elliptisch polarisiert ist, bevor dieser an der λ/4-Verzögerungseinrichtung 20a der ersten Kombinationseinrichtung K1 linear polarisiert wird. Gleiches gilt in Bezug auf den dritte und vierten Eingangsstrahl 3, 4, aus denen in der zweiten Kombinationseinrichtung K2 der zweite Überlagerungsstrahl U2 gebildet wird. Durch die Einstellung der relativen Phasenlage Δφ₁₂ des ersten und zweiten Eingangsstrahls 1, 2 sowie der relativen Phasenlage Δφ₃₄ des dritten und vierten Eingangsstrahls 3, 4 kann daher die jeweilige lineare Polarisationsrichtung R1, R2 des ersten und zweiten Überlagerungsstrahls U1, U2 eingestellt werden. Die Ausrichtung der Polarisationsrichtungen R1, R2 der Überlagerungsstrahlen U1, U2 relativ zur Vorzugsachse V des Polarisationsstrahlteilers 9c der dritten Kombinationseinrichtung K3 ermöglicht es, die Aufteilung der Leistung der Überlagerungsstrahlen U1, U2 auf den Ausgang A und auf den Diagnoseausgang D und somit die Leistung P_{A} des Ausgangsstrahls 6 einzustellen.

Abweichend von der in Fig. 2b gezeigten Darstellung kann auf die beiden λ/4-Verzögerungseinrichtungen 20a,b verzichtet werden, wenn die Polarisatorachse V des Polarisationsstrahlteilers 9c der dritten Kombinationseinrichtung K3 unter einem Winkel von 45° zur ersten und zweiten Polarisationsrichtung R1, R2 ausgerichtet ist, wie dies in Fig. 2b angedeutet ist. An Stelle der λ/4-Verzögerungseinrichtungen 20a,b können in Fig. 2b auch optische Rotatoren verwendet werden, welche eine Drehung der Polarisationsrichtung der beiden Überlagerungsstrahlen U1, U2 um 45° bewirken und somit denselben Effekt erzeugen wie die Drehung der Polarisationsachse V des Polarisationsstrahlteilers 9c der dritten Kombinationseinrichtung K3 um 45° zur ersten und zweiten Polarisationsrichtung R1, R2. In diesem Fall sind die Polarisatorachsen des Polarisationsstrahlteilers 9c der dritten Kombinationseinrichtung K3 parallel zur ersten und zweiten Polarisationsrichtung R1, R2 ausgerichtet. In allen hier beschriebenen Fällen sind die Vorzugsrichtungen der Polarisation der Überlagerungsstrahlen U1, U2 parallel zu den Polarisatorachsen des Polarisationsstrahlteilers 9c der dritten Kombinationseinrichtung K3 ausgerichtet, da ansonsten ein Teil der Leistung der Überlagerungsstrahlen U1, U2 dem Diagnoseausgang D zugeführt wird und nicht in den Ausgangsstrahl 6 eingebracht werden kann.

Die Polarisationsrichtungen R1, R2 der beiden Überlagerungsstrahlen U1, U2 werden hierbei bevorzugt so gewählt, dass diese gleiche Leistungsanteile in den Ausgangsstrahl 6 einbringen. Auf diese Weise wird wie bei der Überlagerungseinrichtung 5 von Fig. 2b eine unter 45° zu den Polarisationsrichtungen R1, R2 der beiden Überlagerungsstrahlen U1, U2 ausgerichtete elliptische Polarisation erzeugt. Mit Hilfe der λ/4-Verzögerungseinrichtung 20c der dritten Kombinationseinrichtung K3 wird aus dem elliptischen Polarisationszustand des Ausgangsstrahls 6 eine linearer Polarisationszustand des Ausgangsstrahls 6 mit einer einstellbaren Polarisationsrichtung R gebildet.

Die in Fig. 2c gezeigte Überlagerungseinrichtung 5 weist eine erste und zweite Kombinationseinrichtung K1, K2 auf, die wie bei der in Fig. 2b gezeigten Überlagerungseinrichtung 5 ausgebildet sind und die es ermöglichen, die lineare Polarisationsrichtung R1, R2 des ersten bzw. des zweiten Überlagerungsstrahls U1, U2 durch die Einstellung der jeweiligen relativen Phasenlagen Δφ₁₂, Δφ₃₄ des ersten und zweiten Eingangsstrahls 1, 2 bzw. des dritten und vierten Eingangsstrahls 3, 4 vorzugeben. Bei der in Fig. 2c gezeigten Überlagerungseinrichtung 5 werden die relativen Phasenlagen Δφ₁₂, Δφ₃₄ bevorzugt so eingestellt, dass die beiden Überlagerungsstrahlen U1, U2 eine identische Polarisationsrichtung R1, R2 aufweisen. Die Leistung der Eingangsstrahlen 1 bis 4 wird so eingestellt, dass ohne die Überlagerung gleiche Leistungen in den Ausgangsstrahl 6 überführt werden. Durch die Einstellung der relativen Phasenlage Δφ_{12,34} zwischen den beiden Überlagerungsstrahlen U1, U2 kann mit Hilfe des weiter oben beschriebenen Intensitätsstrahlteilers 8c der dritten Kombinationseinrichtung K3 die Leistung P_{A} des Ausgangsstrahls 6 eingestellt werden, und zwar in einem Wertebereich zwischen 0% und 100% der Summe der Leistungen P₁ bis P₄ der Eingangsstrahlen 1 bis 4.

Bei der in Fig. 2d dargestellten Überlagerungseinrichtung 5 weisen die erste und die zweite Kombinationseinrichtung K1, K2 für die kohärente Überlagerung jeweils einen Polarisationsstrahlteiler 9a,b auf, die einen ersten und zweiten elliptisch polarisierten Überlagerungsstrahl U1, U2 erzeugen. Bei der hier vorausgesetzten identischen Leistungen P₁ bis P₄ der vier Eingangsstrahlen 1 bis 4 resultiert eine elliptische Polarisation mit Hauptachsen, die unter 45° zu der bzw. den Polarisatorachsen V bzw. zu den beiden Polarisationsrichtungen R1, R2 der jeweiligen Eingangsstrahlen 1,2 bzw. 3,4 ausgerichtet ist. Bei der Variation der relativen Phasenlagen Δφ₁₂; Δφ₃₄ können hierbei die Extremwerte zirkulare Polarisation und lineare Polarisation durchlaufen werden. Zudem kann die Leistung eingestellt werden, die in den ersten Überlagerungsstrahl U1 und in den zweiten Überlagerungsstrahl U2 eingekoppelt wird. Bevorzugt werden die beiden relativen Phasenlagen Δφ₁₂; Δφ₃₄ gleich groß gewählt, um die beiden Überlagerungsstrahlen U1, U2 dem Intensitätsstrahlteiler 8c der dritten Kombinationseinrichtung mit im Wesentlichen gleicher Leistung zuzuführen. Die Polarisation, genauer gesagt der elliptische Polarisationszustand der beiden Überlagerungsstrahlen U1, U2 wird auf diese Weise ebenfalls identisch eingestellt. Auf diese Weise wird bei der Überlagerung der beiden Überlagerungsstrahlen U1, U2 von einer nach dem Intensitätsstrahlteiler 8c der dritten Kombinationseinrichtung K3 angeordneten λ/4-Verzögerungseinrichtung 20c ein linear polarisierter Ausgangsstrahl 6 mit einer einstellbaren Polarisationsrichtung R erzeugt.

Bei den in Fig. 2a-d gezeigten Überlagerungseinrichtungen 5 weisen die drei Kombinationseinrichtungen K1, K2, K3 für die kohärente Überlagerung jeweils entweder einen Intensitätsstrahlteiler 8a-c oder einen Polarisationsstrahlteiler 9a-c in Form von separaten optischen Bauteilen auf. Dies ist aber nicht zwingend der Fall, vielmehr können zwei oder mehr Kombinationseinrichtungen K1, K2, K3 eines oder mehrere gemeinsame optische Bauteile für die kohärente Überlagerung nutzen.

**Fig. 3a** zeigt eine Überlagerungseinrichtung 5, deren Funktionsweise der in Fig. 2b gezeigten Überlagerungseinrichtung 5 entspricht und bei der die drei Polarisationsstrahlteiler 9a-c in einem einzigen optischen Bauelement in Form eines gemeinsamen Polarisationsstrahlteilers zusammengefasst sind. Die ersten und zweiten Eingangsstrahlen 1,2, die dritten und vierten Eingangsstrahlen 3, 4 und die beiden Überlagerungsstrahlen U1, U2 werden hierbei an unterschiedlichen Positionen entlang des gemeinsamen Polarisationsstrahlteilers 9a,b,c überlagert. Die beiden λ/4-Verzögerungseinrichtungen 20a,b der ersten und zweiten Kombinationseinrichtung K1, K2 der Überlagerungseinrichtung 5 von Fig. 2b sind ebenfalls in Form einer gemeinsamen λ/4-Verzögerungsplatte 20a,b ausgebildet. Zwei Umlenkspiegel 14, 15 dienen zur Umlenkung des ersten und des zweiten Überlagerungsstrahls U1, U2 zu dem gemeinsamen Polarisationsstrahlteiler 9a,b,c für die kohärente Überlagerung zu dem Ausgangsstrahl 6.

Die in **Fig. 3b** gezeigte Überlagerungseinrichtung 5 entspricht in ihrer Funktionsweise der in Fig. 2d gezeigten Überlagerungseinrichtung 5, die erste und zweite Kombinationseinrichtung K1, K2 sind aber in Form eines gemeinsamen Polarisationsstrahlteilers 9a,b ausgebildet. Ein Umlenkspiegel 14 dient zur Umlenkung des ersten Überlagerungsstrahls U1 zu dem Intensitätsstrahlteiler 8c, der gemeinsam mit der λ/4-Verzögerungsplatte 20c die dritte Kombinationseinrichtung K3 der Überlagerungseinrichtung 5 bildet.

Die weiter oben beschriebenen Überlagerungseinrichtungen 5 sind zur kohärenten Überlagerung von vier Eingangsstrahlen 1 bis 4 zu einem kohärent überlagerten Ausgangsstrahl 6 ausgebildet. Die Überlagerungseinrichtung 5 kann aber auch zur Überlagerung von mehreren Gruppen von vier Eingangsstrahlen zu jeweils einem der jeweiligen Gruppe zugeordneten Ausgangsstrahl dienen.

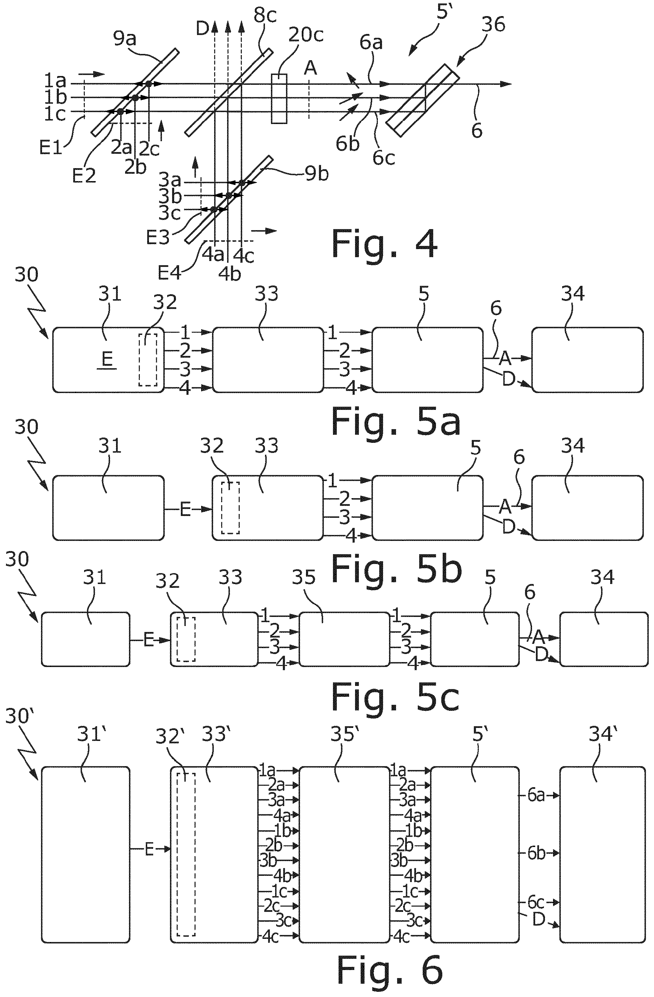

**Fig. 4** zeigt beispielhaft eine solche Überlagerungseinrichtung 5', die zur kohärenten Überlagerung von drei Gruppen von jeweils vier Eingangsstrahlen 1a-c, 2a-c, 3a-c, 4a-c zu einem jeweiligen gemeinsamen Ausgangsstrahl 6a-c ausgebildet ist. Wie bei den in Fig. 3a,b gezeigten Beispielen wird dies dadurch erreicht, dass die beiden Polarisationsstrahlteiler 9a, 9b ausreichend groß ausgebildet sind, um die kohärente Überlagerung der ersten und zweiten Eingangsstrahlen 1a-c, 2a-c bzw. der dritten und vierten Eingangsstrahlen 3a-c, 4a-c an unterschiedlichen, lateral versetzen Positionen zu ermöglichen. Die kohärente Überlagerung der hierbei jeweils gebildeten Überlagerungsstrahlen erfolgt entsprechend an unterschiedlichen, lateral versetzten Positionen eines gemeinsamen Intensitätsstrahlteilers 8c. Auf diese Weise können sowohl die in Fig. 4 angedeuteten linearen Polarisationszustände der drei Ausgangsstrahlen 6a-c als auch deren Leistungen unabhängig voneinander eingestellt werden. Es versteht sich, dass nicht nur drei Gruppen von Eingangsstrahlen 1a-c, 2a-c, 3a-c, 4a-c, sondern eine größere oder eine kleinere Anzahl von Gruppen von Eingangsstrahlen mit Hilfe einer geeignet ausgebildeten Überlagerungseinrichtung 5' kohärent überlagert werden können.

**Fig. 5a****-c** zeigen ein optisches System 30, das eine Strahlquelle 31 zur Erzeugung eines Laserstrahls E sowie eine Aufteilungseinrichtung 32 zur Aufteilung des Laserstrahls E (genauer gesagt der Leistung des Laserstrahls E) zu gleichen Teilen auf die vier zueinander kohärenten Eingangsstrahlen 1 bis 4 aufweist, so dass die vier Eingangsstrahlen 1 bis 4 nach der Aufteilung identische Leistungen P₁ bis P₄ aufweisen. Das optische System 30 umfasst weiterhin eine Phasen-Modulationseinrichtung 33, die zur schnellen Modulation der relativen Phasenlagen Δφ_{1,2}, Δφ_{2,3}, Δφ_{12,34} (vgl. Fig. 1a) der vier Eingangsstrahlen 1 bis 4 ausgebildet ist. Im Strahlweg nach der Phasen-Modulationseinrichtung 33 ist die Überlagerungseinrichtung 5 angeordnet, welche die vier Eingangsstrahlen 1 bis 4 kohärent überlagert und den Ausgangsstrahl 6 bildet. Die Überlagerungseinrichtung 5 kann beispielsweise wie in Fig. 1-c, Fig. 2a-d oder Fig. 3a,b dargestellt ausgebildet sein.

Das optische System 30 weist auch eine Applikationseinrichtung 34 auf, bei der es sich im gezeigten Beispiel um eine Bearbeitungseinrichtung in Form eines Bearbeitungskopfs handelt, der zur Bearbeitung eines Werkstücks mit Hilfe des Ausgangsstrahls 6 dient. Für die Positionierung des Ausgangsstrahls 6 bzw. mehrerer Ausgangsstrahlen 6a-c (s.u.) relativ zum Werkstück kann die Applikationseinrichtung 34 Translationseinheiten zur Bewegung des Bearbeitungskopfs und/oder des Werkstücks aufweisen. Die Applikationseinrichtung kann auch eine Scannereinrichtung zur dynamischen Strahlpositionierung (2 D, 2,5 D) aufweisen und/oder ausgebildet sein eine räumlich-zeitliche Strahlformung, eine Lageerkennung (vor dem Prozess) und/oder eine Prozesskontrolle (in-situ, ex-situ) durchzuführen.

Bei dem in Fig. 5a gezeigten optischen System 30 ist die Aufteilungseinrichtung 32 in der Strahlquelle 31 angeordnet und die Strahlquelle 31 koppelt die vier Eingangsstrahlen 1 bis 4 in die Phasen-Modulationseinrichtung 33 ein. Bei dem in Fig. 5b gezeigten optischen System 30 ist die Aufteilungseinrichtung 32 in der Phasen-Modulationseinrichtung 33 angeordnet und die Strahlquelle 31 koppelt den Laserstrahl E in die Phasen-Modulationseinrichtung 33 ein. Bei dem in Fig. 5c gezeigten optischen System 30 ist zwischen der Phasen-Modulationseinrichtung 33 und der Überlagerungseinrichtung 5 eine Konversionseinrichtung 35 angeordnet. Die Konversionseinrichtung 35 kann eine oder mehrere Funktionen erfüllen und auf unterschiedliche Weise ausgebildet sein, wie nachfolgend näher beschreiben wird.

Bei dem in Fig. 5c gezeigten Beispiel handelt es sich bei der Strahlquelle 31 um einen Seed-Laser eines MOPA (Master Oscillator Power Amplifier)-Systems. Bei der Konversionseinrichtung 35 handelt es sich in diesem Fall um einen Endverstärker des MOPA-Systems, in dem die vier Eingangsstrahlen 1 bis 4 vor der Zuführung zur Überlagerungseinrichtung 5 verstärkt werden. Die Phasen-Modulationseinrichtung 33 ist in diesem Fall im Strahlweg vor dem Endverstärker bzw. der Konversionseinrichtung 35 angeordnet. Dies ist günstig, da in der Phasen-Modulationseinrichtung 33 in diesem Fall optische Komponenten verwendet werden können, die weder eine hohe Leistungstauglichkeit noch eine hohe Effizienz aufweisen müssen. Die mittlere Leistung und/oder die Spitzen-Leistung des Ausgangstrahls 6 ist bei einem optischen System 30 in Form eines MOPA-Systems aufgrund der Verwendung des Endverstärkers hingegen groß. Bei der Konversionseinrichtung 35 des optischen Systems 30 kann es sich aber auch um eine andere Art von optischem Verstärker handeln.

Die Strahlquelle 31 kann zur Erzeugung eines c/w-Laserstrahls und/oder eines gepulsten Laserstrahls E ausgebildet sein. Die Strahlquelle 31 kann beispielsweise einen Ultrakurzpuls-Laserstrahl mit Laserpulsen erzeugen, deren Pulsdauern in der Größenordnung von ps oder von fs liegen. Bei Ultrakurzpulslasern wird häufig die so genannte Chirped Pulse Amplification (CPA) eingesetzt, bei der zeitlich gestreckte Pulse verstärkt und nachfolgend komprimiert werden. Die CPA-Technologie kann mit der hier beschriebenen kohärenten Kopplung der vier Eingangsstrahlen 1 bis 4 zu dem Ausgangsstrahl 6 in der Überlagerungseinrichtung 5 kombiniert werden. In diesem Fall kann die Konversionseinrichtung 35 beispielsweise einen Pulskompressor des CPA-Systems bilden oder beinhalten. Die Konversionseinrichtung 35 kann aber auch generell zur Pulsformung der in diesem Fall gepulsten Eingangsstrahlen 1 bis 4 ausgebildet sein.

Die Konversionseinrichtung 35 kann auch zur Frequenzkonversion der vier Eingangsstrahlen 1 bis 4 dienen. In diesem Fall wird die kohärente Überlagerung in der Überlagerungseinrichtung 5 mit einer in der Konversionseinrichtung 35 im Strahlweg vor der Überlagerungseinrichtung 5 stattfindenden Frequenzkonversion kombiniert. Das optische System 30, auch in Form eines MOPA-Systems, ist mit einer zwischen der Strahlquelle 31 und der Überlagerungsanordnung 5 angeordneten Frequenzkonversionseinrichtung kompatibel.

Es versteht sich, dass die Konversionseinrichtung 35 auch ausgebildet sein kann, mehrere der weiter oben beschriebenen Funktionen oder andere Funktionen zu erfüllen. Beispielsweise kann die Konversionseinrichtung 35 zur Einstellung bzw. Anpassung der für die jeweilige Applikation erforderlichen Strahl- bzw. Puls-Parametern wie Pulsenergie, Pulsdauer, etc. dienen. Die Konversionseinrichtung 35 kann auch für den Strahltransport bzw. für eine flexible Strahlführung verwendet werden. Das optische System 30 kann auch mehrere Konversionseinrichtungen 35 aufweisen.

Beispielsweise kann eine Konversionseinrichtung 35 in die Applikationseinrichtung 34 integriert sein und zur Polarisationsbeeinflussung des Ausgangsstrahls 6 dienen. Beispielsweise kann die Applikationseinrichtung 34 bzw. die Konversionseinrichtung 35 für die Zuführung des Ausgangsstrahls 6 zu dem Werkstück eine doppelbrechende Komponente, z.B. eine optische Faser, insbesondere einen faserbasierten Verstärker, aufweisen. In diesem Fall kann die Überlagerungseinrichtung 5 eine Vor-Kompensation der bei der Zuführung des Ausgangsstrahls 6 zu dem Werkstück erzeugten Doppelbrechung vornehmen. Typischerweise wird die Vor-Kompensation vorgenommen, indem die relativen Phasenlagen Δφ₁₂; Δφ₃₄; Δφ_{12,34}, die durch die Phasen-Modulationseinrichtung 33 eingestellt werden, geeignet angepasst werden, so dass sich am Werkstück die zu erzielende Kombination aus Polarisationszustand bzw. Polarisationsrichtung R und Leistung P_{A} des Ausgangsstrahls 6 einstellt. Auf diese Weise können in dem optischen System 30 auch nicht polarisationserhaltende Transportfasern eingesetzt werden oder das MOPA-Konzept kann modifiziert werden, indem die Überlagerung vor dem (typischerweise faserbasieren) Endverstärker erfolgt, der in diesem Fall in die Applikationseinrichtung 34 integriert ist.

Das in Fig. 6 gezeigte optische System 30' unterscheidet sich von dem in Fig. 5a-c gezeigten optischen System 30 dadurch, dass der Überlagerungseinrichtung 5', die wie in Fig. 4 dargestellt ausgebildet ist, drei Gruppen mit jeweils vier Eingangsstrahlen 1a bis 4a, 1b bis 4b, 1c bis 4c zugeführt werden. Die vier Eingangsstrahlen 1a bis 4a, 1b bis 4b, 1c bis 4c der jeweiligen Gruppe werden in der Überlagerungseinrichtung 35' kohärent zu einem jeweiligen gemeinsamen Ausgangsstrahl 6a-c kombiniert, welcher einer Applikationseinrichtung 34' zugeführt wird. Die Phasen-Modulationseinrichtung 33' und die Aufteilungseinrichtung 32' ist an die Anzahl von insgesamt zwölf Eingangsstrahlen 1a bis 4a, 1b bis 4b, 1c bis 4c angepasst. Es versteht sich, dass die Strahlquelle 31' bei dem in Fig. 6 gezeigten Beispiel nicht zwingend einen einzigen Eingangsstrahl E erzeugen muss, der auf die insgesamt zwölf Eingangsstrahlen 1a bis 4a, 1b bis 4b, 1c bis 4c aufgeteilt wird, da nur die vier Eingangsstrahlen 1a bis 4a, 1b bis 4b, 1c bis 4c in einer jeweiligen Gruppe zueinander kohärent sein müssen.

Das optische System 30' von Fig. 6 kann daher auch eine Strahlquelle 31' aufweisen, die drei Laserquellen zur Erzeugung jeweils eines eigenen Laserstrahls E für jede Gruppe von Eingangsstrahlen 1a bis 4a, 1b bis 4b, 1c bis 4c umfasst. Die Phasen-Modulationseinheit 33' ist in diesem Fall wie weiter oben beschrieben ausgebildet und dient dazu, die relativen Phasenlagen für jede Gruppe von vier Eingangsstrahlen 1a bis 4a, 1b bis 4b, 1c bis 4c unabhängig voneinander einzustellen. Auch die Konversionseinrichtung 35 kann ausgebildet sein, die Konversion für jede der drei Gruppen von Eingangsstrahlen 1a bis 4a, 1b bis 4b, 1c bis 4c unabhängig voneinander vorzunehmen. Dies ermöglicht insbesondere die Kombination unterschiedlicher Parameter in den drei Ausgangsstrahlen 6a-c, indem beispielsweise die drei Laserquellen der Strahlquelle 31' mit abweichenden Parametern betrieben werden oder indem eine unterschiedliche Konversion der drei Gruppen von Eingangsstrahlen 1a bis 4a, 1b bis 4b, 1c bis 4c in der Konversionseinrichtung 35 erfolgt. Die unterschiedlichen Parameter können die Leistung, die Repetitionsfrequenz, die Pulsdauer, die Wellenlänge oder auch einen zeitlichen Versatz zwischen den drei Gruppen von Eingangsstrahlen 1a bis 4a, 1b bis 4b, 1c bis 4c bzw. den zugehörigen Ausgangsstrahlen 6a-c betreffen.

Die drei in Fig. 6 dargestellten Ausgangsstrahlen 6a-c können auch in einer räumlichen Kombinationseinrichtung 36 der Überlagerungseinrichtung 5' räumlich überlagert bzw. kombiniert werden, wie dies in Fig. 4 angedeutet ist. Bei der (optionalen) räumlichen Kombination wird der Applikationseinrichtung 34' nur ein einziger Ausgangsstrahl 6 zugeführt. Die Überlagerung der Ausgangsstrahlen 6a-c kann beispielsweise durch Wellenlängen-Multiplexen erfolgen, wenn in der Konversionseinrichtung 35 eine Konversion in eine jeweils unterschiedliche spektrale Verteilung der drei Gruppen von Eingangsstrahlen 1a bis 4a, 1b bis 4b, 1c bis 4c erfolgt oder wenn die Strahlquelle 31' ausgebildet ist, drei Laserstrahlen mit unterschiedlichen Wellenlängen zu erzeugen, die eine wellenlängenselektive Umlenkung für die Überlagerung in der räumlichen Kombinationseinrichtung 36 ermöglicht. Es versteht sich, dass alternativ zu den drei Ausgangsstrahlen 6a-c auch die Eingangsstrahlen 1a bis 4a, 1b bis 4b, 1c bis 4c einer jeweiligen Gruppe in bzw. vor der Überlagerungseinrichtung 5' räumlich überlagert werden können.

Das weiter oben beschriebene optische System 30, 30' kann beispielsweise für das Einschreiben von Voxeln in transparente Materialien für die Datenspeicherung dienen. Das optische System 30, 30' kann auch für die Herstellung von optischen Komponenten basierend auf einer räumlich abhängigen Polarisationsmanipulation eingesetzt werden. Die schnelle Polarisationsänderung, die mit dem optischen System 30, 30' erzeugt wird, kann auch für andere Anwendungen, z.B. für Analyseverfahren, vorteilhaft eingesetzt werden.

Es versteht sich, dass die Funktionalitäten, die mit Hilfe der weiter oben beschriebenen optischen Bauteile bzw. Komponenten des optischen Systems 30, 30' realisiert werden, auch mit Hilfe von auf andere Weise ausgebildeten optischen Bauteilen realisiert werden können, welche dieselbe Funktionalität erfüllen.

## Patentansprüche

1. Optisches System (30, 30'), umfassend:
eine Strahlquelle (31, 31') zur Erzeugung eines Laserstrahls (E),
eine Aufteilungseinrichtung (32, 32') zur Aufteilung des Laserstrahls (E) auf vier zueinander kohärenten Eingangsstrahlen (1 bis 4, 1a bis 4a),
eine Phasen-Modulationseinrichtung (33, 33') zur Modulation der relativen Phasenlagen (Δφ_{1,2}, Δφ_{2,3}, Δφ_{12,34}) der vier Eingangsstrahlen (1 bis 4, 1a bis 4a), sowie
eine Überlagerungseinrichtung (5, 5') zur kohärenten Überlagerung der vier zueinander kohärenten Eingangsstrahlen (1 bis 4, 1a bis 4a) zu einem Ausgangstrahl (6, 6a), umfassend:
vier Eingänge (E1 bis E4) zum Eintritt jeweils eines der Eingangsstrahlen (1 bis 4, 1a bis 4a),
einen Ausgang (A) zum Austritt des Ausgangstrahls (6, 6a),
eine erste Kombinationseinrichtung (K1) zur kohärenten Kombination des ersten Eingangsstrahls (1, 1a) und des zweiten Eingangsstrahls (2, 2a) zu einem ersten Überlagerungsstrahl (U1),
eine zweite Kombinationseinrichtung (K2) zur kohärenten Kombination des dritten Eingangsstrahls (3, 3a) und des vierten Eingangsstrahls (4, 4a) zu einem zweiten Überlagerungsstrahl (U2), sowie
eine dritte Kombinationseinrichtung (K3) zur Bildung des Ausgangsstrahls (6, 6a) durch kohärente Kombination des ersten Überlagerungsstrahls (U1) und des zweiten Überlagerungsstrahls (U2),
wobei die Überlagerungseinrichtung (5, 5') ausgebildet ist, sowohl einen Polarisationszustand, insbesondere eine Polarisationsrichtung (R), als auch eine Leistung (P_{A}) des Ausgangstrahls (6, 6a) unabhängig voneinander in Abhängigkeit von relativen Phasenlagen (Δφ₁₂; Δφ₃₄; Δφ_{12,34}) der einzelnen Phasen (φ₁, φ₂, φ₃, φ₄) der den vier Eingängen (E1 bis E4) zugeführten Eingangsstrahlen (1 bis 4, 1a bis 4a) zueinander einzustellen.

2. Optisches System nach Anspruch 1, bei dem die erste, die zweite und/oder die dritte Kombinationseinrichtung (K1, K2, K3) ein Interferometer, bevorzugt ein Mach-Zehnder-Interferometer (7a-c), mit einem ersten Strahlkanal (10) zur Propagation eines ersten Teilstrahls (T1) und einem zweiten Strahlkanal (11) zur Propagation eines zweiten Teilstrahls (T2) aufweist oder bildet.

3. Optisches System nach Anspruch 2, bei welchem das Interferometer (7a) der ersten Kombinationseinrichtung (K1) ein Aufteilungselement (12) zur Aufteilung der kohärent überlagerten ersten und zweiten Eingangsstrahlen (1) auf die beiden Teilstrahlen (T1, T2) sowie ein Kombinationselement (13) zur kohärenten Überlagerung der beiden Teilstrahlen (T1, T2) zur Bildung des ersten Überlagerungsstrahls (U1) umfasst,
und/oder
bei welchem das Interferometer (7b) der zweiten Kombinationseinrichtung (K3) ein Aufteilungselement (12) zur Aufteilung der zweiten und dritten kohärent überlagerten Eingangsstrahlen (3, 4) auf die beiden Teilstrahlen (T1, T2) sowie ein Kombinationselement (13) zur kohärenten Überlagerung der beiden Teilstrahlen (T1, T2) zur Bildung des zweiten Überlagerungsstrahls (U2) umfasst.

4. Optisches System nach Anspruch 2 oder 3, bei welchem das Interferometer (7c) der dritten Kombinationseinrichtung (K3) ein Aufteilungselement (12) zur Aufteilung der ersten und zweiten Überlagerungsstrahlen (U1, U2) auf die beiden Teilstrahlen (T1, T2) sowie ein Kombinationselement (13) zur kohärenten Überlagerung der beiden Teilstrahlen (T1, T2) zur Bildung des Ausgangsstrahls (6) umfasst.

5. Optisches System nach einem der Ansprüche 2 bis 4, bei welchem das Interferometer (7a-c) mindestens eine Polarisations-Beeinflussungseinrichtung (16) zur bevorzugt fest vorgegebenen Beeinflussung eines Polarisationszustands, insbesondere einer Polarisationsrichtung (R1, R2), mindestens eines der Teilstrahlen (T1, T2) aufweist.

6. Optisches System nach Anspruch 5, bei welchem das Aufteilungselement (12) und das Kombinationselement (13) als Intensitätsstrahlteiler ausgebildet sind und das Interferometer (7c) als Polarisations-Beeinflussungseinrichtung eine polarisationsdrehendes optisches Einrichtung, insbesondere einen optischen Rotator (16), zur senkrechten Ausrichtung der Polarisationsrichtungen (R1, R2) der beiden Teilstrahlen (T1, T2) relativ zueinander aufweist.

7. Optisches System nach Anspruch 6, wobei die Überlagerungseinrichtung ausgebildet ist, dem Aufteilungselement (12) des Interferometers (7c) den ersten und zweiten Eingangsstrahl (1, 2), den dritten und vierten Eingangsstrahl (3, 4) oder den ersten und zweiten Überlagerungsstrahl (U1, U2) mit zirkularer Polarisation und jeweils entgegengesetzter Drehrichtung (D1, D2) zuzuführen.

8. Optisches System nach Anspruch 5, bei welchem das Aufteilungselement (12) und das Kombinationselement (13) als Polarisationsstrahlteiler ausgebildet sind und das Interferometer (7c) als Polarisations-Beeinflussungseinrichtungen zwei polarisationsdrehende optische Einrichtungen, insbesondere zwei optische Rotatoren (16a,b), zur Drehung einer Polarisationsrichtung (R1, R2) jeweils eines der beiden Teilstrahlen (T1, T2) um 45° aufweist.

9. Optisches System nach Anspruch 8, die Überlagerungseinrichtung weiter umfassend: mindestens zwei polarisationsbeeinflussende, insbesondere polarisationsdrehende optische Elemente (17a,b, 17c,d), die im Strahlweg vor dem Aufteilungselement (12) des Interferometers (7a-c) angeordnet sind und die bevorzugt zur Drehung einer Polarisationsrichtung des ersten und zweiten Eingangsstrahls (1, 2), des dritten und vierten Eingangsstrahls (3, 4) oder des ersten und zweiten Überlagerungsstrahls (U1, U2) um 45° ausgebildet sind.

10. Optisches System nach einem der vorhergehenden Ansprüche, bei welchem die erste Kombinationseinrichtung (K1) zur kohärenten Kombination des ersten Eingangsstrahls (1) und des zweiten Eingangsstrahls (2), die zweite Kombinationseinrichtung (K2) zur kohärenten Kombination des dritten Eingangsstrahls (3) und des vierten Eingangsstrahls (4) und/oder die dritte Kombinationseinrichtung (K3) zur kohärenten Kombination des ersten Überlagerungsstrahls (U1) und des zweiten Überlagerungsstrahls (U2) einen Intensitätsstrahlteiler (8a-c) oder einen Polarisationsstrahlteiler (9a-c) aufweisen.

11. Optisches System nach Anspruch 10, wobei die Überlagerungseinrichtung ausgebildet ist, dem Intensitätsstrahlteiler (8a; 8b, 8c) den ersten und zweiten Eingangsstrahl (1, 2), den dritten und vierten Eingangsstrahl (3, 4) oder den ersten und zweiten Überlagerungsstrahl (U1, U2) mit einem jeweils identischen Polarisationszustand, insbesondere mit einer identischen Polarisationsrichtung (R1, R2), zuzuführen.

12. Optisches System nach Anspruch 10 oder 11, wobei die Überlagerungseinrichtung ausgebildet ist, dem Polarisationsstrahlteiler (9a-c) einen ersten und zweiten Eingangsstrahl (1, 2), einen dritten und vierten Eingangsstrahl (3, 4) oder einen ersten und zweiten Überlagerungsstrahl (U1, U2) zuzuführen, die jeweils zwei zueinander senkrechte Polarisationsrichtungen (R1, R2) aufweisen.

13. Optisches System nach einem der Ansprüche 10 bis 12, bei welchem die erste Kombinationseinrichtung (K1) zur Einstellung eines Polarisationszustands, insbesondere zur Drehung einer Polarisationsrichtung (R1), des ersten Überlagerungsstrahls (U1) abhängig von einer relativen Phasenlage (Δφ₁₂) zwischen dem ersten, bevorzugt linear polarisierten Eingangsstrahl (1) und dem zweiten, bevorzugt linear polarisierten Eingangsstrahl (2) ausgebildet ist, und/oder bei welchem die zweite Kombinationseinrichtung (K2) zur Einstellung eines Polarisationszustands, insbesondere zur Drehung einer Polarisationsrichtung (R2), des zweiten Überlagerungsstrahls (U2) abhängig von einer relativen Phasenlage (Δφ₃₄) zwischen dem dritten, bevorzugt linear polarisierten Eingangsstrahl (3) und dem vierten, bevorzugt linear polarisierten Eingangsstrahl (4) ausgebildet ist, und/oder bei welchem die dritte Kombinationseinrichtung (K3) zur Einstellung eines Polarisationszustands des Ausgangslaserstrahls (6), insbesondere zur Drehung einer Polarisationsrichtung (R) des Ausgangslaserstrahls (6), abhängig von einer relativen Phasenlage (Δφ_{12;34}) zwischen dem ersten Überlagerungsstrahl (U1) und dem zweiten Überlagerungsstrahl (U2) ausgebildet ist.

14. Optisches System nach einem der Ansprüche 10 bis 13, bei welchem die erste, die zweite und/oder die dritte Kombinationseinrichtung (K1, K2, K3) zur Erzeugung einer linearen Polarisation des ersten Überlagerungsstrahls (U1), des zweiten Überlagerungsstrahls (U2) und/oder des Ausgangsstrahls (6) ein Phasenschiebeelement, insbesondere eine λ/4-Verzögerungseinrichtung (20a-c), aufweisen, das im Strahlweg nach dem Intensitätsstrahlteiler (8a-c) oder dem Polarisationsstrahlteiler (9a-c) angeordnet ist.

15. Optisches System nach einem der vorherigen Ansprüche, bei dem die Aufteilungseinrichtung (32') zur Aufteilung des Laserstrahls (E) oder eines weiteren von der Strahlquelle (31') erzeugten Laserstrahls auf mindestens vier weitere zueinander kohärente Eingangsstrahlen (1b,c bis 4b,c) ausgebildet ist, bei dem die Phasen-Modulationseinrichtung (33') zur Modulation der relativen Phasenlagen der mindestens vier weiteren Eingangsstrahlen (1b,c bis 4b,c) ausgebildet ist, und bei dem die Überlagerungseinrichtung (5') zur kohärenten Überlagerung der mindestens vier weiteren Eingangsstrahlen (1b,c bis 4b,c) zu mindestens einem weiteren Ausgangsstrahl (6b, 6c) ausgebildet ist.

## Claims

1. An optical system (30, 30'), comprising:
a beam source (31, 31') for generating a laser beam (E),
a splitting device (32, 32') for splitting the laser beam (E) into four input beams (1 to 4, 1a to 4a) that are coherent with each other,
a phase modulation device (33, 33') for modulating the relative phase positions (Δφ_{1,2}, Δφ_{2,3}, Δφ_{12,34}) of the four input beams (1 to 4, 1a to 4a), and
a superimposing device (5, 5') for coherently superimposing the four input beams (1 to 4, 1a to 4a) that are coherent with each other to form an output beam (6, 6a), comprising:
four inputs (E1 to E4) each for the entry of one of the input beams (1 to 4, 1a to 4a), one output (A) for the exit of the output beam (6, 6a),
a first combination device (K1) for the coherent combination of the first input beam (1, 1a) and the second input beam (2, 2a) to form a first superimposed beam (U1),
a second combination device (K2) for the coherent combination of the third input beam (3, 3a) and the fourth input beam (4, 4a) to form a second superimposed beam (U2), and
a third combination device (K3) for forming the output beam (6, 6a) by coherent combination of the first superimposed beam (U1) and the second superimposed beam (U2),
wherein the superimposing device (5, 5') is designed to control both a polarization state, in particular a polarization direction (R), and a power (P_{A}) of the output beam (6, 6a) independently from one another as a function of relative phase positions (Δφ₁₂; Δφ₃₄ Δφ_{12,34}) of the individual phases (φ₁, φ₂, φ₃, φ₄) of the input beams (1 to 4, 1a to 4a) fed to the four inputs (E1 to E4) relative to one another.

2. The optical system according to claim 1, in which the first, second, and/or third combination device (K1, K2, K3) comprise or form an interferometer, preferably a Mach-Zehnder interferometer (7a-c), with a first beam channel (10) for propagating a first partial beam (T1) and a second beam channel (11) for propagating a second partial beam (T2).

3. The optical system according to claim 2, in which the interferometer (7a) of the first combination device (K1) comprises a splitting element (12) for splitting the coherently superimposed first and second input beams (1) into the two partial beams (T1, T2) and a combination element (13) for coherently superimposing the two partial beams (T1, T2) to form the first superimposed beam (U1),
and/or
in which the interferometer (7b) of the second combination device (K3) comprises a splitting element (12) for splitting the second and third coherently superimposed input beams (3, 4) into the two partial beams (T1, T2) and a combination element (13) for coherently superimposing the two partial beams (T1, T2) to form the second superimposed beam (U2).

4. The optical system according to claim 2 or 3, in which the interferometer (7c) of the third combination device (K3) comprises a splitting element (12) for splitting the first and second superimposed input beams (U1, U2) into the two partial beams (T1, T2) and a combination element (13) for coherently superimposing the two partial beams (T1, T2) to form the output beam (6).

5. The optical system according to any one of claims 2 to 4, in which the interferometer (7a-c) has at least one polarization influencing device (16) for the preferably fixed influencing of a polarization state, in particular a polarization direction (R1, R2), of at least one of the partial beams (T1, T2).

6. The optical system according to claim 5, in which the splitting element (12) and the combination element (13) are designed as intensity beam splitters and the interferometer (7c) as a polarization influencing device has a polarization-rotating optical device, in particular an optical rotator (16), for the perpendicular alignment of the polarization directions (R1, R2) of the two partial beams (T1, T2) relative to each other.

7. The optical system according to claim 6, wherein the superimposing device is designed to feed the first and second input beams (1, 2), the third and fourth input beams (3, 4) or the first and second superimposed beams (U1, U2) with circular polarization and each with opposite directions of rotation (D1, D2) to the splitting element (12) of the interferometer (7c).

8. The optical system according to claim 5, in which the splitting element (12) and the combination element (13) are designed as polarization beam splitters and the interferometer (7c) has two polarization-rotating optical devices as polarization influencing devices, in particular two optical rotators (16a, b), for rotating a polarization direction (R1, R2) of each of the two partial beams (T1, T2) by 45°.

9. The optical system according to claim 8, the superimposing device further comprising: at least two polarization-influencing, in particular polarization-rotating optical elements (17a, b; 17c, d) which are arranged in the beam path in front of the splitting element (12) of the interferometer (7a-c) and which are preferably designed to rotate a polarization direction of the first and second input beams (1, 2), of the third and fourth input beams (3, 4) or of the first and second superimposed beams (U1, U2) around 45°.

10. The optical system according to any one of the preceding claims, in which the first combination device (K1) for the coherent combination of the first input beam (1) and the second input beam (2), the second combination device (K2) for the coherent combination of the third input beam (3) and the fourth input beam (4) and/or the third combination device (K3) for the coherent combination of the first superimposed beam (U1) and the second superimposed beam (U2) have an intensity beam splitter (8a-c) or a polarization beam splitter (9a-c).

11. The optical system according to claim 10, wherein the superimposing device is designed to feed the first and second input beams (1, 2), the third and fourth input beams (3, 4) or the first and second superimposed beams (U1, U2) with an in each case identical polarization state, in particular with an identical polarization direction (R1, R2), to the intensity beam splitter (8a, 8b, 8c).

12. The optical system according to claim 10 or 11, wherein the superimposing device is designed to feed a first and second input beam (1, 2), a third and fourth input beam (3, 4) or a first and second superimposed beam (U1, U2), each of which have two mutually perpendicular polarization directions (R1, R2), to the polarization beam splitter (9a-c).

13. The optical system according to any one of claims 10 to 12, in which the first combination device (K1) is designed to adjust a polarization state, in particular to rotate a polarization direction (R1), of the first superimposed beam (U1) depending on a relative phase position (Δφ₁₂) between the first, preferably linearly polarized input beam (1) and the second, preferably linearly polarized input beam (2),
and/or
in which the second combination device (K2) is designed to adjust a polarization state, in particular to rotate a polarization direction (R2), of the second superimposed beam (U2) depending on a relative phase position (Δφ₃₄) between the third, preferably linearly polarized input beam (3) and the fourth, preferably linearly polarized input beam (4),
and/or
in which the third combination device (K3) is designed to adjust a polarization state of the output laser beam (6), in particular to rotate a polarization direction (R), of the output laser beam (6) depending on a relative phase position (Δφ_{12;34}) between the first superimposed beam (U1) and the second superimposed beam (U2).

14. The optical system according to any one of claims 10 to 13, in which the first, second, and/or third combination device (K1, K2, K3) for generating a linear polarization of the first superimposed beam (U1), the second superimposed beam (U2) and/or the output beam (6) has a phase-shifting element, in particular a λ/4 delay device (20a-c), which is arranged in the beam path after the intensity beam splitter (8a-c) or the polarization beam splitter (9a-c).

15. The optical system according to any one of the previous claims, in which the splitting device (32') is designed to split the laser beam (E) or another laser beam generated by the beam source (31') into at least four further input beams (1b, c to 4b,c), that are coherent to each other, in which the phase modulation device (33') is designed to modulate the relative phase positions of the at least four further input beams (1b, c to 4b, c), and in which the superimposing device (5') is designed to coherently superimpose the at least four further input beams (1b, c to 4b,c) into at least one further output beam (6b, 6c).

## Revendications

1. Système optique (30, 30') comprenant :
une source de faisceau (31, 31') pour générer un faisceau laser (E),
un dispositif de division (32, 32') pour diviser le faisceau laser (E) en quatre faisceaux d'entrée (1 à 4, 1a à 4a) mutuellement cohérents,
un dispositif de modulation de phase (33, 33') pour la modulation des déphasages relatifs (Δφ_{1, 2}, Δφ_{2, 3}, Δφ_{12, 34}) des quatre faisceaux d'entrée (1 à 4, 1a à 4a), et
un dispositif de superposition (5, 5') pour superposer de manière cohérente les quatre faisceaux d'entrée (1 à 4, 1a à 4a) mutuellement cohérents afin de former un faisceau de sortie (6, 6a), comprenant :
quatre entrées (E1 à E4) pour l'entrée de chacun des faisceaux d'entrée (1 à 4, 1a à 4a),
une sortie (A) pour la sortie du faisceau de sortie (6, 6a),
un premier dispositif de combinaison (K1) pour combiner de manière cohérente le premier faisceau d'entrée (1, 1a) et le deuxième faisceau d'entrée (2, 2a) afin de former un premier faisceau de superposition (U1),
un deuxième dispositif de combinaison (K2) pour combiner de manière cohérente le troisième faisceau d'entrée (3, 3a) et le quatrième faisceau d'entrée (4, 4a) afin de former un deuxième faisceau de superposition (U2), et
un troisième dispositif de combinaison (K3) pour former le faisceau de sortie (6, 6a) par la combinaison cohérente du premier faisceau de superposition (U1) et du deuxième faisceau de superposition (U2),
dans lequel le dispositif de superposition (5, 5') est conçu pour ajuster mutuellement aussi bien un état de polarisation, en particulier une direction de polarisation (R), qu'une puissance (P_{A}) du faisceau de sortie (6, 6a) indépendamment l'un de l'autre en fonction des déphasages relatifs (Δφ₁₂ ; Δφ₃₄ ; Δφ_{12,34}) des phases individuelles (φ₁, φ₂, φ₃, φ₄) des faisceaux d'entrée (1 à 4, 1a à 4a) conduits aux quatre entrées (E1 à E4).

2. Système optique selon la revendication 1, dans lequel le premier, le deuxième et/ou le troisième dispositif de combinaison (K1, K2, K3) comprend ou forme un interféromètre, de préférence un interféromètre de Mach-Zehnder (7a-c), avec un premier canal de faisceau (10) pour propager un premier faisceau partiel (T1) et un deuxième canal de faisceau (11) pour propager un deuxième faisceau partiel (T2).

3. Système optique selon la revendication 2, dans lequel l'interféromètre (7a) du premier dispositif de combinaison (K1) comprend un élément de division (12) pour diviser les premier et deuxième faisceaux d'entrée (1) superposés de manière cohérente en lesdits deux faisceaux partiels (T1, T2), ainsi qu'un élément de combinaison (13) pour superposer de manière cohérente les deux faisceaux partiels (T1, T2) afin de former le premier faisceau de superposition (U1),
et/ou
dans lequel l'interféromètre (7b) du deuxième dispositif de combinaison (K3) comprend un élément de division (12) pour diviser les deuxième et troisième faisceaux d'entrée (3, 4) superposés de manière cohérente en lesdits deux faisceaux partiels (T1, T2), ainsi qu'un élément de combinaison (13) pour superposer de manière cohérente les deux faisceaux partiels (T1, T2) afin de former le deuxième faisceau de superposition (U2).

4. Système optique selon la revendication 2 ou 3, dans lequel l'interféromètre (7c) du troisième dispositif de combinaison (K3) comprend un élément de division (12) pour diviser les premier et deuxième faisceaux de superposition (U1, U2) en lesdits deux faisceaux partiels (T1, T2), ainsi qu'un élément de combinaison (13) pour superposer de manière cohérente les deux faisceaux partiels (T1, T2) afin de former le faisceau de sortie (6).

5. Système optique selon l'une des revendications 2 à 4, dans lequel l'interféromètre (7a-c) comporte au moins un dispositif de modification de polarisation (16) pour modifier de préférence de manière prédéterminée un état de polarisation, en particulier une direction de polarisation (R1, R2), d'au moins l'un des faisceaux partiels (T1, T2).

6. Système optique selon la revendication 5, dans lequel l'élément de division (12) et l'élément de combinaison (13) sont conçus comme des diviseurs de faisceaux d'intensité, et l'interféromètre (7c) comporte, comme dispositif de modification de polarisation, un dispositif optique de rotation de polarisation, en particulier un rotateur optique (16), pour l'alignement perpendiculaire des directions de polarisation (R1, R2) des deux faisceaux partiels (T1, T2) l'un par rapport à l'autre.

7. Système optique selon la revendication 6, dans lequel le dispositif de superposition est conçu pour conduire à l'élément de division (12) de l'interféromètre (7c) les premier et deuxième faisceaux d'entrée (1, 2), les troisième et quatrième faisceaux d'entrée (3, 4) ou les premier et deuxième faisceaux de superposition (U1, U2) avec une polarisation circulaire, et dans chaque cas avec un sens de rotation opposé (D1, D2).

8. Système optique selon la revendication 5, dans lequel l'élément de division (12) et l'élément de combinaison (13) sont conçus comme des diviseurs de faisceaux de polarisation, et l'interféromètre (7c) comporte deux dispositifs optiques de rotation de polarisation, en particulier deux rotateurs optiques (16a, b), comme dispositifs de modification de polarisation pour faire tourner une direction de polarisation (R1, R2) de chacun des deux faisceaux partiels (T1, T2) de 45°.

9. Système optique selon la revendication 8, le dispositif de superposition comprenant en outre : au moins deux éléments optiques (17a, b ; 17c, d) modifiant la polarisation, en particulier faisant tourner la polarisation, qui sont agencés sur le trajet du faisceau devant l'élément de division (12) de l'interféromètre (7a-c), et qui sont de préférence conçus pour faire tourner une direction de polarisation des premier et deuxième faisceaux d'entrée (1, 2), des troisième et quatrième faisceaux d'entrée (3, 4) ou des premier et deuxième faisceaux de superposition (U1, U2) de 45°.

10. Système optique selon l'une des revendications précédentes, dans lequel le premier dispositif de combinaison (K1) pour combiner de manière cohérente le premier faisceau d'entrée (1) et le deuxième faisceau d'entrée (2), le deuxième dispositif de combinaison (K2) pour combiner de manière cohérente le troisième faisceau d'entrée (3) et le quatrième faisceau d'entrée (4) et/ou le troisième dispositif de combinaison (K3) pour combiner de manière cohérente le premier faisceau de superposition (U1) et le deuxième faisceau de superposition (U2) comprennent un diviseur de faisceaux d'intensité (8a-c) ou un diviseur de faisceaux de polarisation (9a-c).

11. Système optique selon la revendication 10, dans lequel le dispositif de superposition est conçu pour conduire au diviseur de faisceaux d'intensité (8a ; 8b, 8c) les premier et deuxième faisceaux d'entrée (1, 2), les troisième et quatrième faisceaux d'entrée (3, 4) ou les premier et deuxième faisceaux de superposition (U1, U2) avec un état de polarisation identique respectif, en particulier avec une direction de polarisation (R1, R2) identique.

12. Système optique selon la revendication 10 ou 11, dans lequel le dispositif de superposition est conçu pour conduire au diviseur de faisceaux de polarisation (9a-c) des premier et deuxième faisceaux d'entrée (1, 2), des troisième et quatrième faisceaux d'entrée (3, 4) ou des premier et deuxième faisceaux de superposition (U1, U2), avec chaque fois deux directions de polarisation mutuellement perpendiculaires (R1, R2).

13. Système optique selon l'une des revendications 10 à 12, dans lequel le premier dispositif de combinaison (K1) est conçu pour ajuster un état de polarisation, en particulier pour faire tourner une direction de polarisation (R1), du premier faisceau de superposition (U1) en fonction d'un déphasage relatif (Δφ₁₂) entre le premier faisceau d'entrée (1), de préférence polarisé linéairement, et le deuxième faisceau d'entrée (2), de préférence polarisé linéairement,
et/ou
dans lequel le deuxième dispositif de combinaison (K2) est conçu pour ajuster un état de polarisation, en particulier pour faire tourner une direction de polarisation (R2), du deuxième faisceau de superposition (U2) en fonction d'un déphasage relatif (Δφ₃₄) entre le troisième faisceau d'entrée (3), de préférence polarisé linéairement, et le quatrième faisceau d'entrée (4), de préférence polarisé linéairement,
et/ou
dans lequel le troisième dispositif de combinaison (K3) est conçu pour ajuster un état de polarisation du faisceau laser de sortie (6), en particulier pour faire tourner une direction de polarisation (R) du faisceau laser de sortie (6), en fonction d'un déphasage relatif (Δφ_{12;34}) entre le premier faisceau de superposition (U1) et le deuxième faisceau de superposition (U2).

14. Système optique selon l'une des revendications 10 à 13, dans lequel le premier, le deuxième et/ou le troisième dispositif de combinaison (K1, K2, K3) pour générer une polarisation linéaire du premier faisceau de superposition (U1), du deuxième faisceau de superposition (U2) et/ou du faisceau de sortie (6) comportent un élément de déphasage, en particulier un dispositif de retard λ/4 (20a-c), qui est agencé sur le trajet du faisceau après le diviseur de faisceaux d'intensité (8a-c) ou le diviseur de faisceaux de polarisation (9a-c).

15. Système optique selon l'une des revendications précédentes, dans lequel le dispositif de division (32') est conçu pour diviser le faisceau laser (E) ou un autre faisceau laser généré par la source de faisceau (31') en au moins quatre autres faisceaux d'entrée (1b, c à 4b, c) mutuellement cohérents, dans lequel le dispositif de modulation de phase (33') est conçu pour moduler les déphasages relatifs desdits au moins quatre autres faisceaux d'entrée (1b, c à 4b, c), et dans lequel le dispositif de superposition (5') est conçu pour superposer de manière cohérente lesdits au moins quatre autres faisceaux d'entrée (1b,c à 4b,c) afin de former au moins un autre faisceau de sortie (6b, 6c).
